# FASCICULE DE BREVET EUROPEEN

(11) **EP 2 438 013 B1**
(45) Date de publication et mention de la délivrance du brevet: **13.11.2019**
(21) Numéro de dépôt: 10734790.8
(22) Date de dépôt: 04.06.2010
(51) Int. Cl.: C01G 1/02, C01G 23/04, C01G 25/02, C01G 9/02, C01G 11/00, C01G 15/00, C01G 17/02, C01G 19/02, C01G 27/02, C01G 29/00, C01G 49/02, C01G 51/04, B82Y 30/00, C08K 3/22, C08K 13/02, C08K 13/04, C08L 71/02

(54) **PROCEDE DE PREPARATION D'UNE COMPOSITION HYDROCOMPATIBLE DE NANOCRISTAUX D'OXYDE(S) METALLIQUE(S)**
VERFAHREN ZUR HERSTELLUNG EINER WASSERKOMPATIBLEN ZUSAMMENSETZUNG AUS METALLOXIDNANOKRISTALLEN
METHOD FOR PREPARING A WATER-COMPATIBLE COMPOSITION OF METAL OXIDE NANOCRYSTALS

(30) Priorité: 05.06.2009 FR 0902736
(43) Date de publication de la demande: 11.04.2012
(73) Titulaire: Centre National de la Recherche Scientifique (C.N.R.S.), 75794 Paris Cedex 16 (FR)
(72) Inventeur: KAHN, Myrtil, F-31400 Toulouse (FR); GAUFFRE-GUIRARDEL, Fabienne, F-31520 Ramonville (FR); RUBIO-GARCIA, Javier, E-33450 Piedras Blancas-Asturias (ES); MINGOTAUD, Christophe, F-31400 Toulouse (FR); CHAUDRET, Bruno, F-31320 Vigoulet-Auzil (FR)
(74) Mandataire: Lavoix
(86) Numéro de dépôt international: PCT/FR2010/051103
(87) Numéro de publication internationale: WO 2010/139910

(56) Documents cités:
- EP-A1- 1 775 575
- WO-A1-03/014011
- FR-A1- 2 853 307
- US-A1- 2008 134 836
- WILLIAM W. YU, EMMANUEL CHANG, JOSHUA C. FALKNER, JUNYAN ZHANG,ALI M. AL-SOMALI, CHRISTIE M. SAYES, JUDAH JOHNS ET AL.: "Forming Biocompatible and Nonaggregated Nanocrystals in Water Using Amphiphilic Polymers" J. AM. CHEM. SOC., vol. 129, 20 février 2007 (2007-02-20), pages 2871-2879, XP002568619
- JULIANE KEILITZ ET AL: "Dendritic Polymers with a Core-Multishell Architecture: A Versatile Tool for the Stabilization of Nanoparticles" CHEMISTRY OF MATERIALS, AMERICAN CHEMICAL SOCIETY, WASHINGTON, US LNKD- DOI:10.1021/CM8002639, vol. 20, no. 7, 8 avril 2008 (2008-04-08), pages 2423-2425, XP002566332 ISSN: 0897-4756 [extrait le 2008-03-07]
- RUI HONG, NICHOLAS O. FISCHER, TODD EMRICK, AND VINCENT M. ROTELLO: "Surface PEGylation and Ligand Exchange Chemistry of FePt Nanoparticles for Biological Applications" CHEM. MATER., vol. 17, 5 août 2005 (2005-08-05), pages 4617-4621, XP002568620
- KIMIHIRO SUSUMU ET AL: "Enhancing the Stability and Biological Functionalities of Quantum Dots via Compact Multifunctional Ligands", JOURNAL OF THE AMERICAN CHEMICAL SOCIETY, AMERICAN CHEMICAL SOCIETY, US, vol. 129, no. 45, 14 November 2007 (2007-11-14), pages 13987-13996, XP008146644, ISSN: 0002-7863, DOI: 10.1021/JA0749744 [retrieved on 2007-10-23]

## Description

L'invention concerne un procédé de préparation d'une composition de nanoparticules, dites nanocristaux d'oxyde(s) métallique(s), d'au moins un oxyde métallique à l'état cristallin, à partir d'au moins un précurseur organométallique en milieu solvant aprotique et en présence d'au moins un ligand choisi dans le groupe des composés organiques présentant au moins une chaîne carbonée et solubles dans ledit milieu solvant aprotique. Elle s'étend à une composition de nanoparticules, dites nanocristaux d'oxyde(s) métallique(s), ainsi obtenue.

Dans tout le texte, on adopte la terminologie suivante :
- nanoparticule : toute particule quelle que soit sa forme, présentant au moins une largeur et une épaisseur toutes deux inférieures à 100nm, typiquement comprises entre 1nm et 20nm ;
- nanocristaux d'oxyde(s) métallique(s) : nanoparticules constituées d'au moins un composé choisi parmi les oxydes métalliques à l'état cristallin, chaque nanoparticule possédant la structure du(des) oxyde(s) métallique(s), c'est-à-dire étant formée d'atomes de métal(aux) et d'oxygène liés entre eux comme dans les oxydes métalliques massiques ;
- précurseur organométallique : toute molécule ou composé de coordination contenant au moins un groupement organique lié à au moins un atome métallique (métal de transition ou composé des groupes principaux, à savoir notamment le zinc, le cadmium, le bore, l'aluminium, le gallium, l'indium, le thallium, le germanium, l'étain, le titane, le zirconium, l'hafnium, les lanthanides (Ce, Pr, Nd, Sm, Eu, Gd, Tb, Dy, Ho, Er, Tm, Yb, Lu), le scandium, l'yttrium, le silicium, le bismuth et les autres métaux de transition) par un atome de carbone ou un hétéroatome (choisi notamment parmi N, P, As, Si, S, Se, Te), de ce groupement organique ;
- précurseur organométallique spontanément réactif à l'oxydation : précurseur organométallique qui se transforme de manière exothermique en un oxyde dans lequel l'atome métallique a un degré d'oxydation supérieur ou égal à 1 alors qu'il est mis en présence d'au moins un oxydant (tel que l'eau, l'oxygène, l'air ambiant...) ;
- oxydant : tout agent permettant la transformation d'un précurseur organométallique en un oxyde ;
- chaîne carbonée : toute chaîne aliphatique, saturée ou non saturée, normale ou ramifiée, substituée ou non, pouvant comprendre des hétéroatomes ;
- milieu solvant aprotique : toute composition qui n'est pas protogène, ne présente pas d'atome d'hydrogène apte à former des liaisons hydrogène, et dans laquelle l'eau pouvant être présente à l'état de traces ne fait pas office d'agent solvant ; une telle composition est apte à former une solution liquide lorsqu'elle est placée au contact d'au moins un composé tel qu'un précurseur organométallique ; elle peut se présenter à l'état initialement liquide, ou au contraire ne passer à l'état liquide qu'après contact avec le(les) composé(s) à solubiliser ; elle peut être simple, c'est-à-dire formée d'un seul composé, ou au contraire complexe et renfermer plusieurs composés ; en particulier, elle peut renfermer non seulement un ou plusieurs composé(s) faisant office d'agent solvant, mais aussi tout autre composé non consommé par la réaction de formation des nanocristaux métalliques -notamment dans une réaction d'oxydation- sensiblement neutre vis-à-vis de la dissolution du(des) précurseur(s) organométallique(s), et jouant un rôle ou non dans la réaction de formation des nanocristaux métalliques -notamment dans une réaction d'oxydation- ; un tel milieu solvant aprotique est en particulier non aqueux ;
- solution colloïdale : toute composition liquide limpide de nanoparticules solides dispersées dans un liquide ; une solution colloïdale liquide présente de nombreuses propriétés d'une solution liquide vraie mais pas toutes, les nanoparticules restant à l'état solide ; on parle aussi parfois de suspension ou de dispersion colloïdale ;
- composition hydrocompatible de nanoparticules : toute composition de nanoparticules susceptibles d'être dispersées au moins en milieu aqueux, notamment toute composition susceptible de former une solution colloïdale (dispersion liquide) en milieu aqueux ;
- composition organocompatible de nanoparticules : toute composition de nanoparticules susceptibles d'être dispersées dans au moins un milieu organique -notamment non aqueux- protique ou aprotique, notamment toute composition susceptible de former une solution colloïdale (dispersion liquide) avec au moins un tel milieu liquide organique -notamment non aqueux- protique ou aprotique,
- groupement de coordination : tout groupement chimique susceptible de former une liaison covalente, dative, hydrogène ou électrostatique avec les atomes de métaux, les ions métalliques, l'oxygène et les oxydes métalliques.

WO 2004/092069 décrit un procédé de préparation de nanoparticules d'au moins un oxyde métallique cristallin, dans lequel on choisit au moins un précurseur organométallique spontanément réactif à l'oxydation, on réalise une solution liquide de chaque précurseur organométallique dans un milieu solvant non aqueux en présence d'au moins un ligand soluble dans ledit milieu solvant, et on met cette solution liquide en contact avec au moins un oxydant dans des conditions réactionnelles adaptées pour entraîner directement la production de nanocristaux d'oxyde(s) métallique(s).

Ce procédé donne satisfaction et permet de contrôler la forme, la taille des nanoparticules et leurs propriétés. Par ailleurs, la thèse de Carole Pagès, Université Toulouse III-Paul Sabatier UFRPCA Laboratoire de Chimie de Coordination, 17 décembre 2007 pages 120 à 149 montre en particulier que les ligands qui doivent être utilisés pour la préparation de telles nanoparticules doivent impérativement présenter une chaîne alkyle aliphatique. Ainsi, aucune composition de nanocristaux d'oxyde(s) métallique(s) par un tel procédé en simple solution dans un milieu solvant aprotique n'a pu être obtenue en présence d'un ligand ne présentant pas une telle chaîne alkyle aliphatique.

Ce procédé connu est applicable à tout composé métallique pour lequel il existe un précurseur organométallique spontanément réactif à l'oxydation susceptible d'être solubilisé dans un milieu solvant aprotique, ou à toute combinaison de tels composés métalliques. Ainsi, parmi ces composés métalliques, on peut citer : le zinc, le cadmium, le bore, l'aluminium, le gallium, l'indium, le thallium, le germanium, l'étain, le titane, le zirconium, l'hafnium, les lanthanides (Ce, Pr, Nd, Sm, Eu, Gd, Tb, Dy, Ho, Er, Tm, Yb, Lu), le scandium, l'yttrium, le silicium, le bismuth et les autres métaux de transition.

Tous ces procédés connus de synthèse de nanocristaux d'oxyde(s) métallique(s) à partir de précurseurs organométalliques en milieu solvant aprotique présentent l'inconvénient de produire des compositions de nanocristaux d'oxydes métalliques qui sont organocompatibles, mais qui ne sont par contre pas hydrocompatibles.

À ce titre il est à noter que bien que la présence de traces d'eau dans le milieu solvant soit connue pour pouvoir jouer un rôle dans le cadre de la réaction d'oxydation (cf. « Size- and Shape-Control of Crystalline Zinc Oxide Nanoparticles : A New Organometallic Synthetic Method », Myrtil L. Kahn et al., Adv. Func. Mater. 2005, 15, No. 3, mars), la présence d'une quantité importante et non contrôlée d'eau est strictement incompatible avec le contrôle d'une réaction de décomposition d'organométallique(s). En effet, dans le domaine technique des organométalliques, l'eau est considérée systématiquement comme nuisible, voire dangereuse. Plus particulièrement, dans le cas d'une réaction d'oxydation à partir d'un précurseur organométallique, il est considéré que la présence d'une quantité importante et non contrôlée d'eau dans le milieu aurait nécessairement pour conséquence à tout le moins de perturber considérablement, voire d'empêcher le fonctionnement de la réaction. En effet, on sait que toute présence incontrôlée d'eau conduit immanquablement à la formation des hydroxydes métalliques (décompositions destructives et exothermiques du type de Zerewitinoff) et est destructrice et nuisible dans le cadre de la préparation et de l'utilisation des composés organométalliques. Au demeurant, les réactions en présence d'organométalliques sont le plus souvent réalisées en présence d'un piège à eau de façon à travailler en atmosphère sèche.

Cela est d'autant plus vrai dans le cas d'une réaction d'oxydation telle que mentionnée dans WO2004/092069 pour laquelle une quantité importante et non contrôlée d'eau viendrait de surcroît nécessairement perturber le fonctionnement de la réaction d'oxydation elle-même. Ainsi, il est hors de question de réaliser ce type de réaction en présence d'une quantité non contrôlée d'eau, ou même en présence d'un composé hydrophile susceptible d'introduire de l'eau en quantité importante et non contrôlée dans le milieu réactionnel.

Or, il serait utile de permettre l'obtention de telles compositions de nanocristaux d'oxyde(s) métallique(s) qui soient hydrocompatibles, et plus particulièrement à la fois organocompatibles et hydrocompatibles, c'est-à-dire qui puissent être dispersées à la fois et selon les besoins dans les milieux aprotiques -notamment organiques non aqueux-, et dans les milieux protiques - notamment l'eau et les milieux aqueux-. En particulier l'obtention de telles compositions hydrocompatibles est importante pour permettre leur utilisation dans de nombreuses applications, notamment dans les milieux physiologiques, à titre thérapeutique ou pour l'imagerie médicale, et dans toutes les applications pour lesquelles on cherche à éviter l'emploi de solvants organiques qui sont des composés organiques volatils (COV) toxiques et/ou polluants dont l'usage doit être limité, voire supprimé, compte tenu des règles de respect de l'environnement.

Différents procédés ont déjà été proposés pour permettre de rendre hydrocompatibles des compositions de nanocristaux d'oxydes métalliques initialement non hydrocompatibles.

Une première approche pourrait consister à échanger les ligands hydrophobes par des ligands analogues mais présentant des groupes hydrophiles tels que des polymères dérivés de PEG (thiol-PEG, amino-PEG, carboxy-PEG). Cette approche nécessiterait cependant une deuxième étape relativement complexe et dont le rendement n'est pas très bon. En outre elle n'aboutirait pas à des nanocristaux d'oxyde(s) métallique(s) exclusivement dotés de ligands hydrophiles, la réaction d'échange n'étant jamais totale.

Une deuxième approche consiste à incorporer dans la composition obtenue des ligands amphiphiles susceptibles d'interagir avec les ligands hydrophobes issus de la préparation des nanoparticules, sans remplacer ces ligands hydrophobes, en formant des structures de bicouches autour des nanoparticules. Les compositions obtenues avec cette approche peuvent présenter une certaine toxicité (par libération de composés amphiphiles), et une stabilité mal contrôlée, ce qui est un inconvénient notamment dans les applications biologiques et thérapeutiques. WILLIAM W. YU ET AL. ("Forming Biocompatible and Nonaggregated Nanocrystals in Water Using Amphiphilic Polymers"J. AM. CHEM. SOC., vol. 129, 20 février 2007, pages 2871-2879) décrit ainsi un procédé de fabrication de nanoparticules cristallines hydrocompatibles en traitant les particules organocompatibles avec un copolymère amphiphile.

Dans certains cas très spécifiques, une autre approche peut consister à choisir pour réaliser la préparation des nanoparticules un ligand présentant à l'une des extrémités de la chaîne alkyle aliphatique, un groupement permettant ultérieurement de réaliser des réactions chimiques pour le greffage d'un groupe hydrophile. Mais, là encore, une étape supplémentaire est nécessaire, et cette approche n'est possible que dans des cas très particuliers, peu utiles en pratique.

En outre, ces différentes approches présentent aussi le plus souvent l'inconvénient que les compositions de nanoparticules modifiées pour être hydrocompatibles ne sont plus, ultérieurement, organocompatibles dans des conditions satisfaisantes.

L'invention vise donc à pallier ces inconvénients et à proposer un procédé permettant d'obtenir par un procédé de synthèse en milieu solvant aprotique directement en une seule étape, une composition de nanocristaux d'oxyde(s) métallique(s) qui soit hydrocompatible, ce qui, jusqu'à maintenant, était considéré comme parfaitement impossible. Plus particulièrement, l'invention vise à proposer un tel procédé permettant d'obtenir une telle composition qui soit à la fois hydrocompatible et organocompatible.

Plus particulièrement l'invention vise à proposer un procédé permettant d'obtenir une composition de nanocristaux d'oxyde(s) métallique(s) se présentant sous forme de solution colloïdale et ce quel que soit le milieu solvant, organique ou aqueux, et dont les propriétés (notamment des propriétés de photoluminescence) restent inchangées en milieu aqueux.

Elle vise également à proposer un tel procédé qui soit simple, rapide, facile à maîtriser, notamment puisse être effectué par synthèse en milieu solvant aprotique directement en une seule étape, et qui puisse faire l'objet d'ajustements aisés pour l'obtention de caractéristiques souhaitées des nanocristaux, notamment en ce qui concerne leurs formes et leurs dimensions. Plus particulièrement, l'invention vise à proposer un tel procédé permettant d'obtenir des compositions liquides de nanocristaux d'oxyde(s) métallique(s) parfaitement dispersés (non agglomérés) dans un milieu solvant pouvant être organique ou aqueux, ces nanocristaux d'oxyde(s) métallique(s) ayant des formes et dimensions pouvant être contrôlées avec précision et qui sont au moins sensiblement uniformes, c'est-à-dire selon une distribution unimodale, notamment sensiblement homogène (faible dispersion), et pouvant même être monodisperses. Également, l'invention vise à proposer un tel procédé permettant d'obtenir des solutions colloïdales de nanocristaux d'oxyde(s) métallique(s) aussi bien dans un milieu solvant organique que dans un milieu solvant aqueux.

L'invention vise également à proposer un tel procédé de préparation qui soit simple, réalisé en une seule étape, sans appareillage complexe, exempt de traitement thermique, ne produisant pas de rejets polluants en quantités importantes, et compatible avec une exploitation à l'échelle industrielle dans des conditions économiques satisfaisantes.

L'invention vise également à proposer une composition telle que mentionnée ci-dessus.

L'invention vise également à proposer un tel procédé et une telle composition applicables à une grande variété de métaux.

Pour ce faire, l'invention concerne un procédé de préparation d'une composition de nanoparticules, dites nanocristaux d'oxyde(s) métallique(s), d'au moins un oxyde métallique à l'état cristallin, à partir d'au moins un précurseur organométallique dans lequel :
- on réalise une solution liquide d'au moins un précurseur organométallique spontanément réactif à l'oxydation, dans un milieu solvant aprotique en présence d'au moins un ligand organique présentant au moins une chaîne carbonée dont au moins une extrémité est fonctionnalisée par un groupement de coordination comprenant au moins un hétéroatome, et soluble dans ledit milieu solvant aprotique,
- on met cette solution liquide en contact avec au moins un oxydant -notamment un gaz oxydant tel que de la vapeur d'eau, ou de l'eau liquide- dans des conditions réactionnelles adaptées pour entraîner directement la formation des nanocristaux d'oxyde(s) métallique(s),
caractérisé en ce qu'on choisit :
- au moins un ligand, dit ligand PEG, dans le groupe des composés organiques comprenant au moins une chaîne carbonée présentant au moins un groupement [-OCH₂CH₂]ₙ, n étant un entier supérieur ou égal à 1, et solubles dans l'eau,
- ledit milieu solvant aprotique de façon que chaque ligand PEG soit soluble dans ce milieu solvant aprotique,
et de façon à obtenir directement en une étape une composition hydrocompatible et organocompatible de nanocristaux d'oxyde(s) métallique(s).

L'invention consiste donc de façon générale en un procédé de préparation de nanocristaux métalliques à partir d'au moins un précurseur organométallique dans lequel :
- on réalise une solution liquide d'au moins un précurseur organométallique, dans un milieu solvant aprotique en présence d'au moins un composé, dit ligand organique, présentant au moins une chaîne carbonée dont au moins une extrémité est fonctionnalisée par un groupement de coordination comprenant au moins un hétéroatome, et soluble dans ledit milieu solvant aprotique,
- on met cette solution liquide en contact avec au moins un réactif dans des conditions réactionnelles adaptées pour entraîner directement la formation des nanocristaux métalliques (en une étape et par décomposition de chaque précurseur organométallique),
caractérisé en ce qu'on choisit :
- au moins un ligand, dit ligand PEG, dans le groupe des ligands organiques comprenant au moins une chaîne carbonée présentant au moins un groupement [-OCH₂CH₂]ₙ, n étant un entier supérieur ou égal à 1, et solubles dans l'eau,
- ledit milieu solvant aprotique de façon que chaque ligand PEG soit soluble dans ce milieu solvant aprotique,
et de façon à obtenir directement en une étape une composition hydrocompatible et organocompatible de nanocristaux métalliques.

Contre toute attente, les inventeurs ont constaté avec la plus grande surprise qu'il est en fait possible de préparer directement une composition de tels nanocristaux métalliques -notamment de nanocristaux d'oxyde(s) métallique(s)-en utilisant, à titre de ligand, au moins un ligand PEG et un solvant organique compatible avec chaque ligand PEG. En effet, un tel ligand PEG soluble dans l'eau est nécessairement hydrophile, et, comme tel, était considéré jusqu'à maintenant comme parfaitement nuisible vis-à-vis de la réaction et des précurseurs organométalliques, notamment du fait qu'il a *a priori* inévitablement pour conséquence d'introduire de l'eau dans le milieu réactionnel. Or, il s'avère qu'il n'en est rien, pour des raisons qui restent à ce jour encore inexpliquées.

De surcroît, les inventeurs ont constaté que ce résultat étonnant peut être obtenu avec une grande variété de ligands PEG, et qu'il suffit en réalité de remplacer la chaîne alkyle aliphatique hydrocarbonée des ligands utilisés dans l'état de la technique, par une chaîne comprenant au moins un groupement [-OCH₂CH₂]ₙ n étant un entier supérieur ou égal à 1, c'est-à-dire un groupement comprenant au moins un motif oxyéthylène [-OCH₂CH₂], plus particulièrement au moins un groupement (linéaire) polyoxyéthylène [OCH₂CH₂]ₙ n étant supérieur à 1.

Avantageusement, un ligand PEG selon l'invention est choisi dans le groupe des ligands organiques solubles dans l'eau comprenant au moins une chaîne carbonée présentant au moins un groupement (linéaire) polyoxyéthylène [OCH₂CH₂]ₙ, n étant un entier supérieur à 1, et dont au moins une extrémité est fonctionnalisée par un groupement de coordination choisi parmi une amine primaire -R³NH₂, un groupement carboxylique -R⁴COOH, un groupement thiol -R⁵SH, un groupement phosphine -R⁶P(Ph)₂, Ph représentant le phényle, un groupement phosphonate choisi parmi -PO(OR⁷)(OR⁸), -PO(O⁻)₂, et -PO(O⁻)(OH) ; R³, R⁴, R⁵, R⁶ représentant un groupement comprenant au moins une chaîne aliphatique, R⁷ et R⁸ étant choisis parmi un atome d'hydrogène et un groupement comprenant au moins une chaîne aliphatique.

Ce groupement polyoxyéthylène d'un ligand PEG d'une composition de nanocristaux d'oxyde(s) métallique(s) obtenue par un procédé selon l'invention, est un groupement linéaire non ramifié. De préférence, ladite chaîne carbonée est également une chaîne linéaire non ramifiée. Quoi qu'il en soit, ladite chaîne carbonée présente une chaîne principale linéaire incorporant au moins un - notamment un et un seul- groupement polyoxyéthylène (linéaire non ramifié) tel que mentionné ci-dessus.

Avantageusement, un ligand PEG selon l'invention est un ligand organique qui comprend non seulement au moins un groupement [OCH₂CH₂]ₙ tel que mentionné ci-dessus, mais également, à titre de groupement de coordination, au moins un groupement choisi parmi les carbonyles, les oxydes d'azote, les aminoalcools, les nitriles (en particulier cyano), les thiols, les thiocyanates, les isothiocyanates, les alcynes, les alcènes, les arènes (ex : le cyclopentadiène), les carbènes, les siloxanes, les acides de Lewis tels que les boranes et les aminoboranes, les phosphines, les oxydes de phosphines, les phosphates, les phosphonates, les imines (bases de Schiff), les composés diazo, les aminés, les oxydes d'amines, les xanthates (R-OC(S)SR'), les sulfites, les thionyles, les thiosulfates, les sulfates, les cyclodextrines, les époxydes, à l'exception de l'éthylène glycol.

Avantageusement et selon l'invention, on choisit au moins un ligand PEG, dit ligand amino/carboxy PEG, dans le groupe des amines et des acides carboxyliques comprenant au moins une chaîne carbonée présentant au moins un groupement [-OCH₂CH₂]ₙ, n étant un entier supérieur ou égal à 1, et solubles dans l'eau. D'autres composés organiques peuvent être utilisés à titre de ligand PEG (par exemple thiol-PEG, phosphine-PEG...) selon les applications, et en particulier selon chaque composé métallique concerné.

Les ligands PEG tels que les amines et les acides carboxyliques présentant au moins un groupement dérivé de l'oxyéthylène, et plus particulièrement au moins un groupement polyoxyéthylène (lesdits ligands PEG étant dérivés de l'éthylèneglycol, et plus particulièrement du poly(éthylèneglycol) PEG), sont solubles dans la plupart des solvants organiques et dans l'eau. Ainsi, de tels ligands PEG sont d'une part solubles à la fois dans ledit milieu solvant aprotique et dans les milieux aqueux, et d'autre part, de façon totalement inattendue et contrairement à tous les préjugés, malgré leur caractère très hydrophile donc nécessairement hydraté dans une proportion importante et incontrôlée, s'avèrent être compatibles avec l'obtention des nanocristaux métalliques -notamment de nanocristaux d'oxyde(s) métallique(s)- dans des conditions quasiment identiques aux ligands amines aliphatiques et acides carboxyliques aliphatiques (dotés de chaînes alkyles aliphatiques hydrocarbonées) traditionnellement utilisés.

Ainsi, les inventeurs ont pu déterminer que tous les efforts entrepris jusqu'à maintenant pour remplacer les ligands hydrophobes, ou les fonctionnaliser ou les encapsuler dans des tensioactifs, sont en réalité inutiles. En effet, le procédé de préparation peut être mis en œuvre par contact direct à partir d'au moins un précurseur organométallique en solution liquide dans un milieu solvant aprotique avec au moins un ligand PEG, et notamment un ligand amino/carboxy PEG, apte à être soluble à la fois dans ledit milieu solvant aprotique, et dans l'eau et les milieux aqueux.

Ainsi, avantageusement et selon l'invention on choisit au moins un ligand PEG, dit ligand amino/carboxy PEG, dans le groupe des amines et des acides carboxyliques comprenant au moins une chaîne carbonée présentant au moins un groupement [-OCH₂CH₂]ₙ n étant un entier supérieur ou égal à 1, et solubles dans l'eau. Plus particulièrement, avantageusement et selon l'invention, on choisit au moins un ligand amino/carboxylique PEG parmi les α-amino-poly(éthylèneglycol), les bis-amino-poly(éthylèneglycol), les α-carboxyl-poly(éthylèneglycol), les bis-carboxyl-poly(éthylèneglycol), et les α-amino-ω-carboxyl-poly(éthylèneglycol).

Un tel ligand amino/carboxy PEG utilisé dans un procédé selon l'invention est un dérivé de l'éthylèneglycol ou d'un PEG dont au moins une extrémité est fonctionnalisée par un groupement choisi parmi une amine primaire - RNH₂ et un groupement carboxylique -R'COOH, c'est-à-dire dont la formule générale (I) est la suivante :

R¹[-OCH₂CH₂]ₙ-OR² (I)

dans laquelle ;
- R¹ est choisi parmi une amine primaire - R³NH₂, un groupement carboxylique -R⁴COOH, un groupement thiol -R⁵SH, un groupement phosphine -R⁶P(Ph)₂, Ph représentant le phényle, un groupement phosphonate - choisi parmi -PO(OR⁷)(OR⁸), -PO(O⁻)₂, et -PO(O⁻)(OH) ; R³, R⁴, R⁵, R⁶ représentant un groupement comprenant au moins une chaîne aliphatique, R⁷ et R⁸ étant choisis parmi un atome d'hydrogène et un groupement comprenant au moins une chaîne aliphatique,
- R² est choisi parmi un atome d'hydrogène, un groupement alkyle, une chaîne grasse non ramifiée, une amine primaire -R³NH₂, un groupement carboxylique -R⁴COOH, un groupement thiol -R⁵SH, un groupement phosphine - R⁶P(Ph)₂, Ph représentant le phényle, un groupement phosphonate choisi parmi - PO(OR⁷)(OR⁸), -PO(O⁻)₂, et -PO(O⁻)(OH) ; R³, R⁴, R⁵, R⁶ représentant un groupement comprenant au moins une chaîne aliphatique, R⁷ et R⁸ étant choisis parmi un atome d'hydrogène et un groupement comprenant au moins une chaîne aliphatique,
- n est un nombre entier supérieur ou égal à 1.

Par ailleurs, avantageusement et selon l'invention, chaque ligand PEG utilisé présente une masse molaire moyenne comprise entre 300 g.mol⁻¹ et 20 000 g.mol⁻¹ -notamment entre 500 g.mol⁻¹ et 5000 g.mol⁻¹-.

Par exemple, avantageusement et selon l'invention on utilise au moins un ligand amino/carboxylique PEG choisi dans le groupe comprenant :
- le poly(éthylèneglycol) bis(3-propylamine) de formule H₂NC₃H₆[-OCH₂CH₂]ₙ-OC₃H₆NH₂, et ayant une masse molaire de l'ordre de 1500 g.mol⁻¹,
- le poly(éthylèneglycol) bis(2-éthylamine) de formule H₂NC₂H₄[-OCH₂CH₂]ₙ-OC₂H₄NH₂, et ayant une masse molaire de l'ordre de 3000 g.mol⁻¹ à 10 000 g.mol⁻¹,
- le α-(2-éthylamine)-méthoxy(éthylèneglycol) de formule H₃C[-OCH₂CH₂]ₙ-OC₂H₄NH₂, et ayant une masse molaire de l'ordre de 750 g.mol⁻¹,
- le poly(éthylèneglycol)dioïque de formule HOOC-CH₂[-OCH₂CH₂]ₙ-O-CH₂-COOH, et ayant une masse molaire de l'ordre de 600 g.mol⁻¹,
- le méthyléther-poly(éthylèneglycol)oïque de formule H₃C[-OCH₂CH₂]ₙ-O-CH₂-COOH, et ayant une masse molaire de l'ordre de 3000 g.mol⁻¹.

De préférence, dans un procédé selon l'invention, on utilise une quantité de ligand(s) PEG équimolaire à celle des atomes de métal du(des) précurseur(s). Autrement dit, on utilise une quantité stœchiométrique de ligand(s) PEG par rapport aux atomes de métal correspondants du(des) précurseur(s).

Avantageusement et selon l'invention, on choisit au moins un ligand non volatil à la température réactionnelle, faisant office de dispersant de la composition produite dans le milieu solvant aprotique. Ainsi, les nanocristaux d'oxyde(s) se trouvent spontanément à l'état dispersé (colloïde) dans la composition finale.

Dans un procédé selon l'invention, on choisit et on adapte les conditions réactionnelles de façon à obtenir directement la formation des nanocristaux, par décomposition de chaque précurseur organométallique. Les conditions réactionnelles choisies comprennent notamment :
- le choix du milieu solvant aprotique ;
- le choix du(des) ligand(s) ;
- les concentrations initiales ;
- la température réactionnelle ;
- la pression réactionnelle,
- le choix de l'oxydant.

Le procédé de l'invention consiste ainsi à réaliser une réaction chimique d'oxydation directe et de décomposition d'au moins un précurseur organométallique en solution liquide. Il se distingue des procédés sol-gel notamment en ce que l'on réalise l'oxydation directe du(des) précurseur(s) spontanément réactif(s), qui n'est(ne sont) pas un(des) alcoolate(s), dans un milieu non aqueux, sans catalyseur (tel qu'un acide minéral ou une base minérale), sans passer par une étape d'hydrolyse contrôlée entraînant la formation d'hydroxydes formant un gel (polymère inorganique), et ne nécessitant pas d'étape ultérieure de calcination pour obtenir les oxydes à l'état cristallin. Dans un procédé selon l'invention, on obtient en effet les nanocristaux d'oxyde(s) métallique(s) par la seule mise en contact de la solution liquide avec un milieu oxydant, sans étape ultérieure, notamment sans étape de calcination.

On peut laisser la solution liquide en présence du(des) ligand(s) PEG reposer à l'abri de tout oxydant pendant une durée prédéterminée avant de réaliser l'oxydation. Cette durée peut être par exemple de plusieurs heures, notamment de l'ordre de 10h à 20h.

Les nanocristaux d'oxyde(s) métallique(s) obtenus selon l'invention peuvent être globalement sphériques (dimensions isotropes) ou au contraire présenter une anisotropie de forme, c'est-à-dire en particulier être allongés en forme de fils. Avantageusement et selon l'invention, les nanocristaux d'oxyde(s) métallique(s) sont des nanoparticules globalement sphériques de dimension moyenne comprise entre 1 nm et 5 nm.

En variante, avantageusement et selon l'invention, les nanocristaux d'oxyde(s) métallique(s) sont des nanoparticules allongées présentant une dimension transversale moyenne comprise entre 1 nm et 7 nm.

Avantageusement et selon l'invention, on choisit au moins une base et au moins un acide à titre de ligands PEG. Avantageusement et selon l'invention, on utilise au moins une amine à titre de base, notamment une amine primaire telle que mentionnée ci-dessus, et au moins un acide carboxylique.

L'utilisation d'un couple acide/base, permet notamment d'obtenir des supercristaux de nanocristaux, c'est-à-dire une organisation des nanocristaux en un réseau solide similaire à un réseau cristallin. Les proportions molaires d'acide, de base, et de précurseur peuvent varier. Des supercristaux de nanocristaux de ZnO ont été obtenus par exemple dans le THF avec les proportions molaires acide/base/précurseur de 0,5/1/1 ; 1/0,5/1 ; et 1/1/1.

Dans un procédé sur l'invention, ledit milieu solvant aprotique comprend au moins un solvant qui est choisi de façon à permettre d'une part la dissolution de chaque précurseur organométallique, d'autre part celle de chaque ligand PEG utilisé, et le déroulement de la réaction d'oxydation pour l'obtention des nanocristaux d'oxyde(s) métallique(s). Avantageusement et selon l'invention ledit milieu solvant aprotique comprend un solvant choisi parmi le THF, le toluène, l'anisole, et le dichlorométhane.

Avantageusement et selon l'invention, le milieu solvant aprotique est non aqueux et non alcoolique, c'est-à-dire est en outre exempt de composé présentant des fonctions hydroxyles réactives, de façon à éviter toute formation d'hydroxyde. En particulier, le milieu solvant aprotique est avantageusement exempt (aux traces près) d'eau et de fonctions alcool, et donc est exempt de composé alcool (primaire, secondaire ou tertiaire).

Dans un procédé selon l'invention, ledit milieu solvant aprotique comprend au moins deux composés distincts. En particulier, avantageusement et selon l'invention, ledit milieu solvant aprotique comprend au moins un ligand PEG et au moins un composé volatil dans les conditions réactionnelles s'évaporant au fur et à mesure de l'oxydation.

Ainsi, dans un mode particulier de réalisation de l'invention, ledit milieu solvant aprotique est choisi de façon à présenter une phase liquide volatile au fur et à mesure de la réaction d'oxydation, de sorte que les nanocristaux obtenus se présentent, en fin de réaction, sous la forme d'une poudre. Ainsi, avantageusement et selon l'invention ledit milieu solvant aprotique comprend au moins un ligand PEG et au moins un composé liquide volatil dans les conditions réactionnelles, ledit composé liquide volatile étant choisi pour s'évaporer au fur et à mesure de la formation des nanocristaux, et de façon à obtenir directement les nanocristaux sous forme d'une poudre.

De plus, les inventeurs ont constaté que ledit milieu solvant aprotique et sa structure permettent de contrôler la taille, la forme et la distribution en taille des nanocristaux.

Par ailleurs, avantageusement et selon l'invention on réalise la production des nanocristaux à pression ambiante et à une température comprise entre 0°C et 200°C -notamment à température ambiante-. Dans la majorité des cas, on peut réaliser l'oxydation à pression ambiante et à une température inférieure à 50°C -notamment à température ambiante-. Ainsi, le procédé selon l'invention est d'une extrême simplicité.

Avantageusement et selon l'invention, de préférence et lorsque cela est possible, on choisit chaque précurseur de telle sorte que chaque résidu d'oxydation formé à partir de ce précurseur soit volatil dans les conditions réactionnelles. Ainsi, dans un procédé selon l'invention, la réaction d'oxydation ne produit que des nanocristaux solides d'oxyde(s) métallique(s) et un(des) résidu(s) organique(s) volatil(s). Avec un milieu solvant volatil, et lorsque le(les) résidu(s) d'oxydation est(sont) volatil(s), la composition résultant de la réaction d'oxydation est solide. Elle peut être reprise dans un autre milieu solvant, y compris aqueux, et forme alors une solution colloïdale liquide. Cela étant rien n'empêche, en variante, de choisir un précurseur dont les résidus d'oxydation ne sont pas volatils dans les conditions réactionnelles.

Compte tenu de ce qui précède, le procédé selon l'invention peut être mis en œuvre avec tous les éléments pour lesquels il existe un précurseur organométallique spontanément réactif à l'oxydation et pouvant être placé en solution liquide dans un milieu solvant aprotique compatible avec la solubilisation, en quantité suffisante, d'au moins un ligand PEG.

Parmi ces éléments, on peut citer : le zinc, le fer, le cobalt, le cadmium, le bore, l'aluminium, le gallium, l'indium, le thallium, le germanium, l'étain, le titane, le zirconium, l'hafnium, les lanthanides (Ce, Pr, Nd, Sm, Eu, Gd, Tb, Dy, Ho, Er, Tm, Yb, Lu), le scandium, l'yttrium, le silicium, le bismuth et les autres métaux de transition.

A titre d'exemples de précurseurs organométalliques spontanément réactifs à l'oxydation pouvant être utilisés dans un procédé selon l'invention, on peut citer les composés complexes de coordination comprenant au moins l'un des éléments suscités et au moins un groupement choisi parmi : les amidures, les alkyles, les aryles, les cyclopentadienyles, les oléfines, les polyoléfines, les alcynes, les alcynines, les silyles.

Avantageusement et selon l'invention, pour la préparation d'une composition hydrocompatible de nanocristaux d'oxyde de zinc, on choisit le dicyclohexyl de zinc Zn(C₆H₁₁)₂, communément désigné ZnCy₂ à titre de précurseur. En présence d'au moins un ligand PEG en proportion équimolaire avec ce précurseur dans le THF et en réalisant l'oxydation par l'air à température ambiante, on a obtenu un échantillon homogène de nanocristaux dispersés d'oxyde de zinc cristallin (phase zincite) de dimension moyenne entre 1nm et 10 nm et ayant une distribution de taille étroite. Ces nanocristaux de semi-conducteur sont en outre photoluminescents. De tels nanocristaux solubles aussi bien en milieu aqueux qu'en milieu organique présentent un intérêt industriel pratique considérable.

Avantageusement et selon l'invention, pour la préparation d'une composition hydrocompatible de nanocristaux d'oxyde de cobalt, on utilise le bis-bis-triméthyl-silylamidure de cobalt Co[N(Si(CH₃)₃)₂]₂ à titre de précurseur organométallique.

Avantageusement et selon l'invention, pour la préparation d'une composition hydrocompatible de nanocristaux d'oxyde de fer, on utilise le bis-bis-triméthyl-silylamidure de fer Fe[N(Si(CH₃)₃)₂]₂ à titre de précurseur organométallique.

Avantageusement et selon l'invention, pour la préparation d'une composition hydrocompatible de nanocristaux d'oxyde d'étain, on choisit le bis bis diméthylamidure d'étain [Sn(N(CH₃)₂)₂]₂ à titre de précurseur organométallique.

Avantageusement et selon l'invention, pour la préparation d'une composition hydrocompatible de nanocristaux d'oxyde d'indium, on choisit le triméthyle d'indium In(CH₃)₃.

Avantageusement et selon l'invention, pour la préparation d'une composition hydrocompatible d'un oxyde métallique mixte on choisit au moins deux précurseurs distincts dans le groupe formé parmi le dicyclohexyl de zinc Zn(C₆H₁₁)₂, le bis-bis-triméthyl-silylamidure de cobalt Co[N(Si(CH₃)₃)₂]₂, le bis-bis-triméthyl-silylamidure de fer Fe[N(Si(CH₃)₃)₂]₂, le bis bis diméthylamidure d'étain [Sn(N(CH₃)₂)₂]₂, le triméthyle d'indium In(CH₃)₃.

Ces exemples ne sont pas limitatifs, d'autres précurseurs pouvant aussi bien être utilisés.

Avantageusement et selon l'invention, on utilise au moins un oxydant choisi parmi le dioxygène, la vapeur d'eau, l'eau liquide, les oxydants organiques, les autres oxydants non organiques.

A titre d'oxydants organiques, on peut citer par exemple les hydroperoxydes organiques et les oxydes d'amines tels que l'oxyde de triméthylamine. A titre d'oxydants non organiques, on peut citer par exemple le peroxyde d'hydrogène, l'oxyde de phosphore, l'oxyde de soufre, le dioxyde d'azote, l'ozone, le bioxyde de chlore, et les complexes métalliques porteurs d'au moins un atome d'oxygène (par exemple les complexes métal-peroxydes, les complexes métal-oxydes, les complexes métal-hydroperoxydes, les complexes métal-superoxydes, ...).

Avantageusement et selon l'invention, on réalise l'oxydation sans agitation de la solution liquide. Les traces d'eau que cette solution liquide peut renfermer peuvent faire office d'oxydant. La solution liquide est aussi mise au contact de l'air atmosphérique. En particulier, dans un mode de réalisation avantageux et selon l'invention, on utilise un agent solvant volatil, au moins un précurseur organométallique formant un résidu d'oxydation volatil, et on laisse la solution liquide au contact de l'air ambiant sans agitation. L'agent solvant s'évapore au fur et à mesure que l'air oxyde le précurseur en solution, et le résidu d'oxydation autre que l'oxyde métallique s'évapore. En réalité, il est possible que l'oxydation soit due aux seules traces d'eau solubilisées en provenance de l'agent solvant volatil de départ et de l'air ambiant (toujours humide). Il reste en final une composition solide d'oxyde métallique (avec éventuellement chaque ligand à la surface des nanocristaux).

D'autres oxydants que les traces d'eau solubilisées et/ou l'air ambiant peuvent être utilisés, notamment la vapeur d'eau, l'eau liquide, le dioxygène pur... Néanmoins, c'est un avantage du procédé de l'invention que de permettre la production spontanée de nanocristaux d'oxyde(s) cristallin(s) par simple mise au contact avec l'air ambiant.

L'invention permet d'obtenir une composition hydrocompatible et organocompatible de nanocristaux d'au moins un oxyde métallique se présentant sous forme d'une poudre ou d'une solution colloïdale, et ayant des formes et des dimensions correspondant à une distribution unimodale.

Avec un procédé selon l'invention il est possible d'obtenir de façon sélective, reproductible et quantitative, l'oxyde métallique cristallin à l'état de nanocristaux parfaitement dispersés (non agglomérés), hydrocompatibles, et ayant des formes et dimensions au moins sensiblement uniformes, c'est-à-dire selon une distribution unimodale, notamment sensiblement homogène (faible dispersion), et pouvant même être monodisperses.

L'invention s'étend à une composition obtenue par un procédé selon l'invention. Ainsi, l'invention concerne une composition de nanoparticules, dites nanocristaux d'oxyde(s) métallique(s), d'au moins un oxyde métallique à l'état cristallin, caractérisée en ce qu'elle comprend au moins un ligand, dit ligand PEG, choisi dans le groupe des composés organiques solubles dans l'eau comprenant au moins une chaîne carbonée présentant au moins un groupement [-OCH₂CH₂]ₙ, n étant un entier supérieur ou égal à 1, et dont au moins une extrémité est fonctionnalisée par un groupement de coordination comprenant au moins un hétéroatome, et solubles dans l'eau, en ce qu'au moins un ligand PEG est en interaction (par une liaison de coordination) directe avec les nanocristaux d'oxyde(s) métallique(s) par au moins un groupement de coordination comprenant au moins un hétéroatome, de sorte que cette composition de nanocristaux d'oxyde(s) métallique(s) est hydrocompatible et organocompatible.

En particulier, avantageusement, une composition selon l'invention comprend au moins un ligand PEG choisi dans le groupe des composés organiques solubles dans l'eau et comprenant au moins une chaîne carbonée :
- comprenant au moins un groupement polyoxyéthylène [-OCH₂CH₂]ₙ, n étant un entier supérieur à 1,
- dont au moins une extrémité est fonctionnalisée par un groupement de coordination, en interaction directe avec la surface des nanocristaux d'oxyde(s) métallique(s), et choisi parmi une amine primaire -R³NH₂, un groupement carboxylique -R⁴COOH, un groupement thiol -R⁵SH, un groupement phosphine -R⁶P(Ph)₂, Ph représentant le phényle, un groupement phosphonate choisi parmi -PO(OR⁷)(OR⁸), -PO(O⁻)₂, et -PO(O⁻)(OH) ; R³, R⁴, R⁵, R⁶ représentant un groupement comprenant au moins une chaîne aliphatique, R⁷ et R⁸ étant choisis parmi un atome d'hydrogène et un groupement comprenant au moins une chaîne aliphatique.

Un groupement polyoxyéthylène d'un ligand PEG d'une composition selon l'invention, est un groupement linéaire non ramifié. De préférence, ladite chaîne carbonée est également une chaîne linéaire non ramifiée. Quoi qu'il en soit, ladite chaîne carbonée présente une chaîne principale linéaire incorporant au moins un groupement polyoxyéthylène tel que mentionné ci-dessus.

Dans une composition sur l'invention, les molécules de ligand PEG sont en interaction directe avec la surface des nanocristaux d'oxyde(s) métallique(s), c'est-à-dire sont liées à des atomes métalliques et/ou à des atomes d'oxygène. Plus précisément, un groupement de coordination d'extrémité de chaque molécule de ligand PEG est lié (par une liaison de coordination, c'est-à-dire en particulier à l'exclusion d'une liaison par interactions faibles de type Van der Waals, qui n'est pas une liaison de coordination au sens de l'invention) à au moins un tel atome métallique et/ou d'oxygène des nanocristaux d'oxyde(s) métallique(s).

En outre, avantageusement une composition selon l'invention est aussi caractérisée en ce que chaque ligand PEG est conforme à tout ou partie des caractéristiques mentionnées ci-dessus en référence au procédé selon l'invention.

Avantageusement une composition selon l'invention est une dispersion des nanocristaux qui se présente sous forme d'une solution colloïdale aqueuse.

Dans une composition sur l'invention, les nanocristaux métalliques sont choisis dans le groupe formé des nanocristaux d'oxyde de zinc, des nanocristaux d'oxyde de cobalt, des nanocristaux d'oxyde de fer, des nanocristaux d'oxyde mixte de fer et de cobalt, des nanocristaux d'oxyde d'indium, des nanocristaux d'oxyde d'étain, des nanocristaux d'oxyde mixte d'indium et d'étain. Ces exemples ne sont pas limitatifs et d'autres nanocristaux d'oxyde(s) métallique(s) peuvent être obtenus conformément à l'invention.

Avantageusement et selon l'invention, les nanocristaux d'oxyde(s) métallique(s) sont des nanoparticules globalement sphériques de dimension moyenne comprise entre 1 nm et 5 nm. En variante, avantageusement et selon l'invention, les nanocristaux d'oxyde(s) métallique(s) présentent une anisotropie de forme (ils ne sont pas sphériques). Avantageusement et selon l'invention, les nanocristaux d'oxyde(s) métallique(s) ont une forme allongée avec une largeur moyenne inférieure à 50 nm et une longueur moyenne supérieure à deux fois la largeur moyenne. Avantageusement et selon l'invention, les nanocristaux d'oxyde(s) métallique(s) présentent une largeur moyenne comprise entre 1 nm et 7 nm et une longueur moyenne comprise entre 10 nm et 20 nm.

L'invention concerne en outre un procédé et une composition caractérisés en combinaison par tout ou partie des caractéristiques mentionnées ci-dessus ou ci-après.

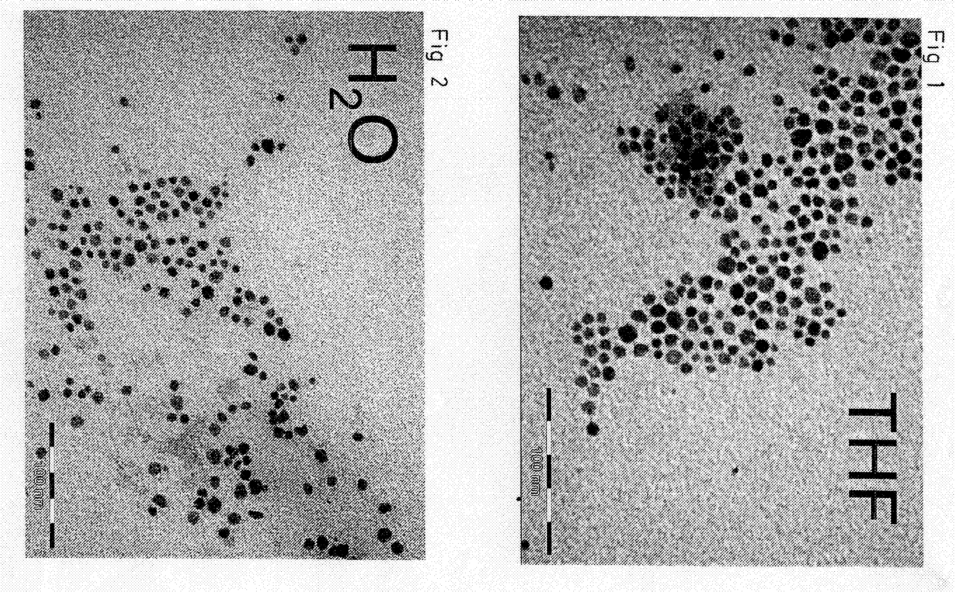

D'autres buts, caractéristiques et avantages de l'invention apparaissent à la lecture des exemples suivants et des figures 1 à 16 annexées qui représentent des vues microscopiques, des spectres d'absorption et de RMN de compositions selon l'invention obtenues dans les exemples.

### Protocole général :

Une solution liquide du(des) ligand(s) PEG dans 6 ml de milieu solvant aprotique préalablement séché (de sorte qu'une quantité résiduelle d'eau de l'ordre de 50 ppm (mesurée par titration Karl-Fisher) est présente dans ledit milieu solvant aprotique) est préparée sous atmosphère d'argon. La concentration en ligand(s) PEG dans cette solution est de 0,021 mol.L⁻¹, 0,042 mol.L⁻¹, ou 0,084 mol.L⁻¹. La solution est agitée sous ultrasons à température ambiante pendant une demi-heure de façon à obtenir une solution transparente. Ensuite, une quantité de 0,25 mmol d'au moins un précurseur organométallique est ajoutée. La concentration en précurseur peut être modifiée en fonction de la taille des nanocristaux souhaitée comme enseigné dans WO2004/092069.

On obtient une solution transparente. La solution est ensuite placée au contact de l'air ambiant et de l'humidité ambiante. Elle reste en contact avec l'air et l'humidité ambiante pendant une durée d, par exemple de l'ordre de quatre jours, qui correspond généralement au temps nécessaire pour l'évaporation totale du solvant, lorsque celui-ci est suffisamment volatil à température ambiante. Dans le cas où le solvant n'est pas complètement évaporé au bout de quelques jours, on constate que des nanocristaux d'oxyde(s) métallique(s) sont formés. Lorsque le solvant est suffisamment volatil, et est totalement évaporé, une composition solide correspondant à un échantillon de nanocristaux d'oxyde(s) métallique(s) est obtenue. Cette composition solide peut être dispersée dans un solvant approprié, organique ou aqueux, généralement jusqu'à des concentrations variant entre 1 mg.mL⁻¹ et 3 mg.mL⁻¹.

Dans le cas particulier de ZnO, lorsque le milieu solvant aprotique réactionnel n'est pas assez volatil pour être complètement évaporé, la formation des nanocristaux peut être vérifiée en irradiant sous UV (λ = 312 nm) la solution qui devient luminescente. D'une façon générale, toutes les solutions liquides colloïdales obtenues de ZnO présentent des propriétés de luminescence. Lorsqu'un échantillon solide est obtenu, la diffraction sur poudre de cet échantillon permet de vérifier la phase cristalline obtenue. Dans le cas de ZnO, le diffractogramme obtenu correspond à du ZnO en phase zincite hexagonale ayant le groupe d'espace P_{6₃} mc. Des pics de diffraction additionnels correspondent à des espèces organiques. Ces espèces ont été caractérisées par RMN en solution et correspondent au(x) ligand(s) présent(s) à la surface des particules. Dans le cas des solutions liquides colloïdales, la diffraction électronique des échantillons déposés sur grille de microscopie, permet de vérifier la cristallinité des nanocristaux. Dans tous les exemples, des nanocristaux ont été obtenus. Ces grilles de microscopie sont préparées en déposant une goutte de la solution liquide colloïdale sur la grille. L'utilisation de la microscopie électronique à transmission, TEM, permet également d'observer la taille, la forme et l'homogénéité des nanocristaux formés.

Dans tous les exemples, des solutions colloïdales ont pu être obtenues aussi bien dans différents milieux solvant organiques et dans l'eau, la couleur de chaque solution colloïdale correspondant à celle de chaque oxyde métallique considéré. Dans le cas de l'oxyde de zinc, l'état de surface de ces nanocristaux a été étudié par RMN en solution et la présence du (des) ligand(s) introduit(s) dans le milieu réactionnel a été constatée. Les nanocristaux synthétisés par cette méthode forment des entités se comportant comme tout produit chimique classique et possèdent par exemple une concentration à saturation pour laquelle l'on passe d'une solution colloïdale à une suspension turbide. Cette concentration est intrinsèque à chaque système.

Dans toute la suite, et sur les figures, les abréviations suivantes sont utilisées :
- BisAmPEGl0000: le poly(éthylèneglycol) bis(2-éthylamine) de formule H₂NC₂H₄[-OCH₂CH₂]ₙ-OC₂H₄NH₂, et ayant une masse molaire de l'ordre de 10 000 g.mol⁻¹,
- BisAmPEG1500 : le poly(éthylèneglycol) bis(3-propylamine) de formule H₂NC₃H₆[-OCH₂CH₂]ₙ-OC₃H₆NH₂, et ayant une masse molaire de l'ordre de 1500 g.mol⁻¹,
- MonoAmPEGMn : le α-(2-éthylamine)-méthoxy(éthylèneglycol) de formule H₃C[-OCH₂CH₂]ₙ-OC₂H₄NH₂, et ayant une masse molaire de l'ordre de Mn,
- BisAcPEGMn : le poly(éthylèneglycol)dioïque de formule HOOC-CH₂[-OCH₂CH₂]ₙ-O-CH₂-COOH, et ayant une masse molaire de l'ordre de Mn,
- MonoAcPEGMn : le méthyléther-poly(éthylèneglycol)oïque de formule H₃C[-OCH₂CH₂]ₙ-O-CH₂-COOH, et ayant une masse molaire de l'ordre de Mn,
- Zn(Cy)₂ : le dicyclohexyle de zinc Zn(C₆H₁₁)₂,
- Co(TMSA) : le bis-bis-triméthyl-silylamidure de cobalt CO[N(Si(CH₃)₃)₂]₂,
- Fe(TMSA) : le bis-bis-triméthyl-silylamidure de fer Fe[N(Si(CH₃)₃)₂]₂,
- Sn(TMSA) : le bis-bis-diméthylamidure d'étain [Sn(N(CH₃)₂)₂]₂,
- In(Me)₃ : le triméthyle d'indium In(CH₃)₃.

### EXEMPLE 1 :

Dans cet exemple, on prépare des nanocristaux d'oxyde de zinc ZnO selon le protocole mentionné ci-dessus dans 6 ml de THF préalablement déshydraté en présence d'une concentration Cℓ du ligand BisAmPEG1500 et en utilisant le précurseur Zn(Cy)₂ à raison de 0,25 mmol soit 57,9 mg et une concentration de 0,042 mol.L⁻¹.

Cinq solutions ont été préparées avec des valeurs de Cℓ égales respectivement à 0,0021 mol.L⁻¹ (0,05 eq) ; 0,0042 mol.L⁻¹ (0,10 eq) ; 0,021 mol.L⁻¹ (0,5 eq) ; 0,042 mol.L⁻¹ (1 eq) ; et 0,084 mol.L⁻¹ (2 eq).

La figure 1 est une vue de microscopie électronique en transmission de la solution colloïdale obtenue après réaction dans le THF avec Cℓ =0,084 mol.L⁻¹.

Les nanocristaux peuvent être dispersés dans l'eau, après évaporation du THF, à raison de 1 mg de nanocristaux pour 1 ml d'eau distillée, le mélange étant soumis aux ultrasons pendant 15 minutes. La figure 2 est une vue de microscopie électronique en transmission d'une solution colloïdale aqueuse obtenue après cette re-dispersion dans l'eau des nanocristaux.

Les nanocristaux obtenus se présentent sous forme de nanoparticules globalement sphériques (dimensions isotropes) dont la dimension moyenne est la suivante :
- pour Cℓ= 0,05 eq (0,0021 mol.L⁻¹) : 7,0 ± 2,7 nm
- pour Cℓ= 0,10 eq (0,0042 mol.L⁻¹) : 5,3 ± 1,5 nm
- pour Cℓ= 0,5 eq (0,021 mol.L⁻¹) : 4,7 ± 1,3 nm
- pour Cℓ= 1,0 eq (0,042 mol.L⁻¹) : 4,3 ± 1,5 nm
- pour Cℓ= 2,0 eq (0,084 mol.L⁻¹) : 3,9 ± 0,8 nm

Les nanocristaux sont photoluminescents avec une bande d'émission centrée sur λₑₘ sous excitation lumineuse avec une longueur d'onde d'excitation λₑₓ conformément au tableau ci-après :

| λₑₓ | λₑₘ |
|---|---|
| 280 nm à 360 nm | 580 nm (jaune) |
| 360 nm à 380 nm | 460 nm et 580 nm (blanc) |
| 380 nm à 420 nm | 460 nm (bleu) |

L'émission à 460 nm (bleu) est en particulier caractéristique de la coordination directe du ligand BisAmPEG1500 via le groupement de coordination amine, avec la surface des nanocristaux d'oxyde de zinc.

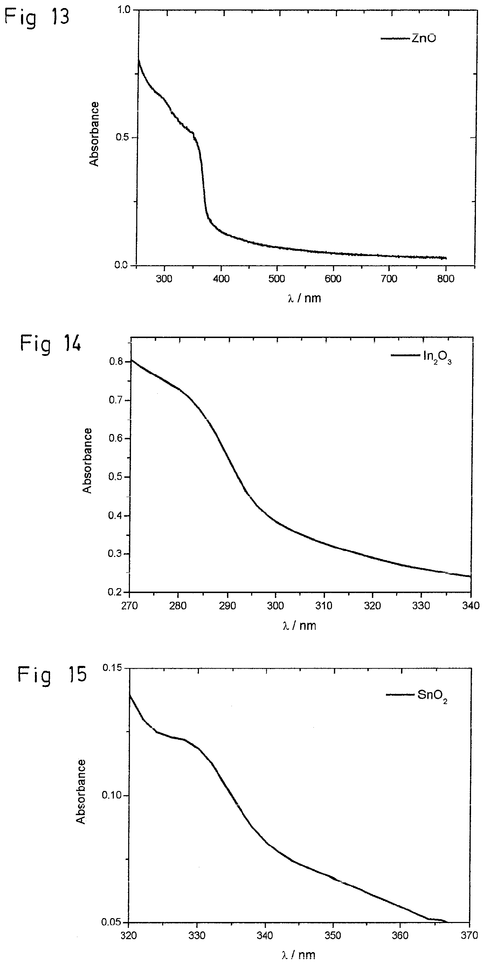

Le spectre d'absorption des nanocristaux obtenus représenté figure 13 confirme, ainsi que les analyses aux rayons X qui ont été effectuées, qu'il s'agit bien d'oxyde de zinc.

### EXEMPLE 2 :

Dans cet exemple, on prépare des nanocristaux d'oxyde de zinc selon le protocole mentionné ci-dessus dans 6 ml de THF préalablement déshydraté en présence d'une concentration de 0,042 mol.L⁻¹ du ligand BisAmPEG10000 et en utilisant le précurseur Zn(Cy)₂ à raison de 0,25 mmol soit 57,9 mg et une concentration de 0,042 mol.L⁻¹.

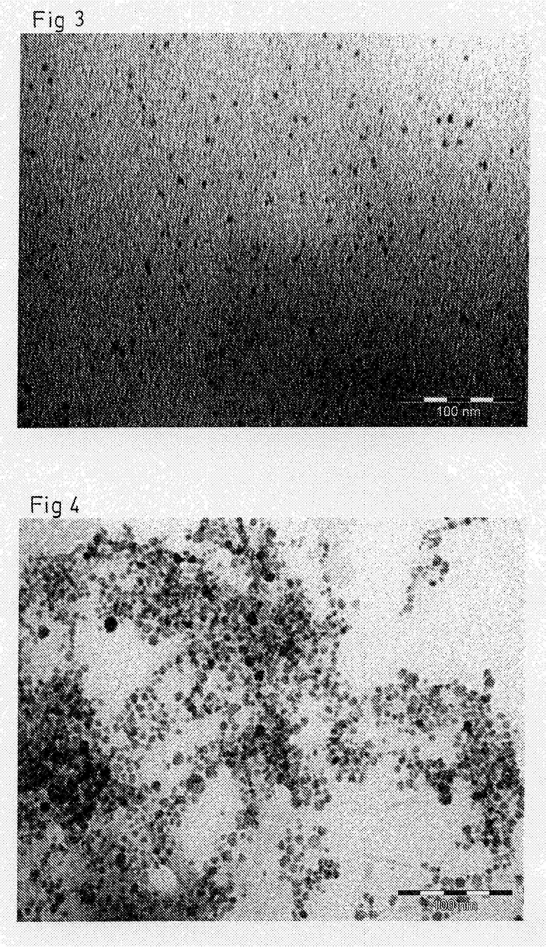

La figure 3 est une vue de microscopie électronique en transmission représentant les nanocristaux obtenus.

Les nanocristaux obtenus se présentent sous forme de nanoparticules d'oxyde de zinc globalement sphériques (dimensions isotropes) dont la dimension moyenne est de 3,9 ± 0,9 nm. Ils peuvent être dispersés dans l'eau pour former une solution colloïdale aqueuse. Ils présentent les mêmes propriétés de photoluminescence que ceux obtenus à l'exemple 1.

### EXEMPLE 3 :

Dans cet exemple, on prépare des nanocristaux d'oxyde de zinc selon le protocole mentionné ci-dessus dans 6 ml de THF préalablement déshydraté en présence d'une concentration de 0,0042 mol.L⁻¹ du ligand BisAcPEG600 et en utilisant le précurseur Zn(Cy)₂ à raison de 0,25 mmol soit 57,9 mg et une concentration de 0,042 mol.L⁻¹.

La figure 4 est une vue de microscopie électronique en transmission représentant les nanocristaux obtenus. Les nanocristaux obtenus se présentent sous forme de nanoparticules d'oxyde de zinc globalement sphériques (dimensions isotropes) dont la dimension moyenne est de 3,8 ± 1,7 nm. Ils peuvent être dispersés dans l'eau pour former une solution colloïdale aqueuse. Ils sont photoluminescents et présentent une longueur d'onde d'émission λₑₘ de 580 nm sous excitation lumineuse de longueur d'onde λₑₓ entre 280 nm et 380 nm.

### EXEMPLE 4 :

Dans cet exemple, on prépare des nanocristaux d'oxyde de zinc selon le protocole mentionné ci-dessus dans 6 ml de THF préalablement déshydraté en présence d'une concentration de 0,0084 mol.L⁻¹ du ligand BisAmPEG1500 et de 0,0042 mol.L⁻¹ du ligand BisAcPEG600 et en utilisant le précurseur Zn(Cy)₂ à raison de 0,25 mmol soit 57,9 mg et une concentration de 0,042 mol.L⁻¹.

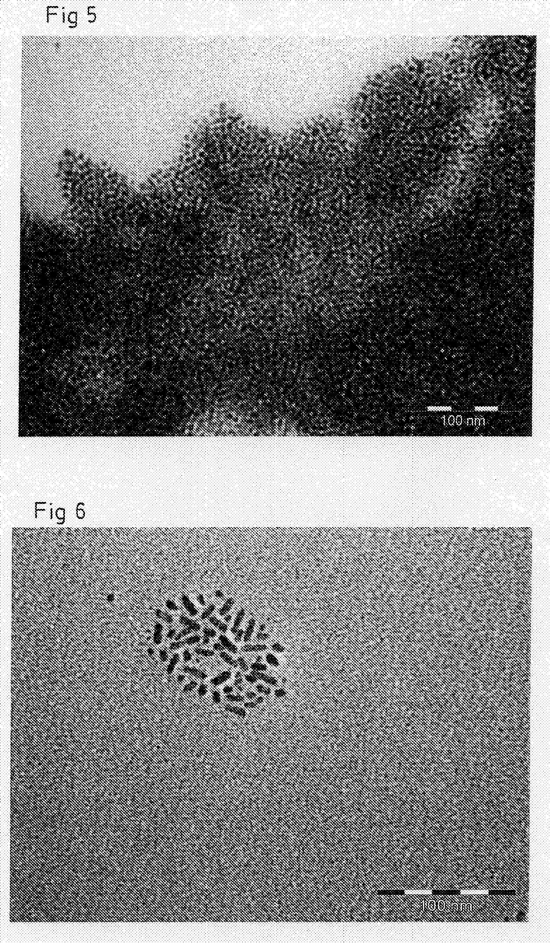

La figure 5 est une vue de microscopie électronique en transmission représentant les nanocristaux obtenus.

Les nanocristaux obtenus se présentent sous forme de nanoparticules d'oxyde de zinc globalement sphériques (dimensions isotropes) dont la dimension moyenne est de 3,5 ± 1,0 nm. Ils peuvent être dispersés dans l'eau pour former une solution colloïdale aqueuse. Ils présentent les mêmes propriétés de photoluminescence que ceux obtenus à l'exemple 1.

### EXEMPLE 5 :

Dans cet exemple, on prépare des nanocristaux d'oxyde de zinc selon le protocole mentionné ci-dessus dans 6 ml de THF préalablement déshydraté en présence d'une concentration de 0,084 mol.L⁻¹ du ligand MonoAmPEG750 et en utilisant le précurseur Zn(Cy)₂ à raison de 0,25 mmol soit 57,9 mg et une concentration de 0,042 mol.L⁻¹.

La figure 6 est une vue de microscopie électronique en transmission représentant les nanocristaux obtenus.

Les nanocristaux obtenus se présentent sous forme de nanoparticules d'oxyde de zinc présentant une anisotropie de forme (nanobâtonnets) ayant globalement les dimensions suivantes : diamètre : 4,9 ± 1,9 nm ; longueur : 16,4 ± 6,9 nm.

Ils peuvent être dispersés dans l'eau pour former une solution colloïdale aqueuse. Ils présentent les mêmes propriétés de photoluminescence que ceux obtenus à l'exemple 1.

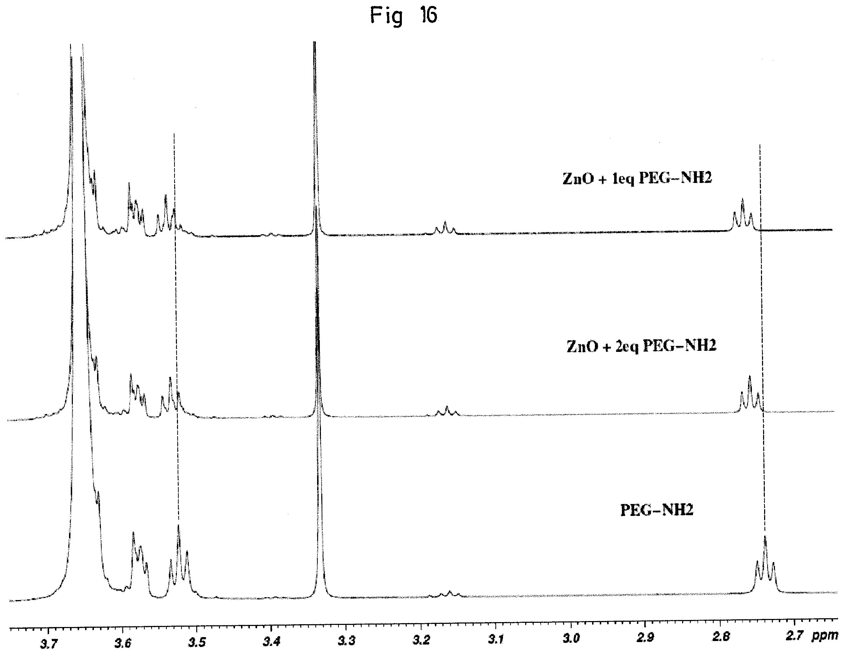

La figure 16 est un spectre obtenu en RMN (résonance magnétique nucléaire) caractéristique de la coordination directe du ligand MonoAmPEG750 via le groupement de coordination amine, avec la surface des nanocristaux d'oxyde de zinc.

### EXEMPLE 6:

Dans cet exemple, on prépare des nanocristaux d'oxyde de zinc selon le protocole mentionné ci-dessus dans 6 ml de THF préalablement déshydraté en présence d'une concentration de 0,084 mol.L⁻¹ du ligand MonoAcPEG3000 et en utilisant le précurseur Zn(Cy)₂ à raison de 0,25 mmol soit 57,9 mg et une concentration de 0,042 mol.L⁻¹.

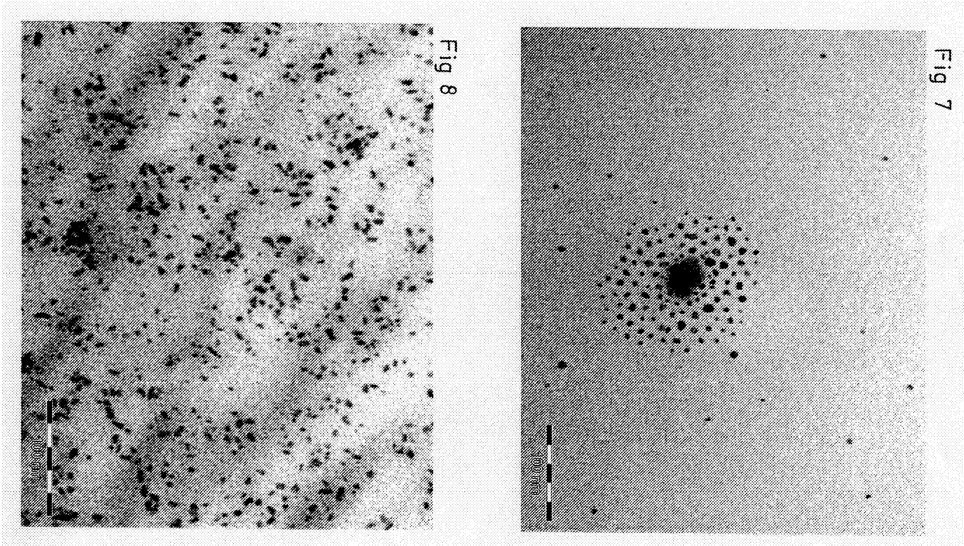

La figure 7 est une vue de microscopie électronique en transmission représentant les nanocristaux obtenus.

Les nanocristaux obtenus se présentent sous forme de nanoparticules d'oxyde de zinc globalement sphériques (dimensions isotropes) dont la dimension moyenne est de 4,2 ± 1,7 nm. Ils peuvent être dispersés dans l'eau pour former une solution colloïdale aqueuse. Ils présentent les mêmes propriétés de photoluminescence que ceux obtenus à l'exemple 3.

### EXEMPLE 7 :

Dans cet exemple, on prépare des nanocristaux d'oxyde de zinc selon le protocole mentionné ci-dessus dans 6 ml de THF préalablement déshydraté en présence d'une concentration de 0,0168 mol.L⁻¹ du ligand MonoAmPEG750 et de 0,084 mol.L⁻¹ du ligand MonoAcPEG3000 et en utilisant le précurseur Zn(Cy)₂ à raison de 0,25 mmol soit 57,9 mg et une concentration de 0,042 mol.L⁻¹.

La figure 8 est une vue de microscopie électronique en transmission représentant les nanocristaux obtenus.

Les nanocristaux obtenus se présentent sous forme de nanoparticules d'oxyde de zinc présentant une anisotropie de forme (nanobâtonnets) ayant globalement les dimensions suivantes : diamètre : 3,7 ± 1,1 nm ; longueur : 7,6 ± 2,3 nm.

Ils peuvent être dispersés dans l'eau pour former une solution colloïdale aqueuse. Ils présentent les mêmes propriétés de photoluminescence que ceux obtenus à l'exemple 1.

### EXEMPLE 8 :

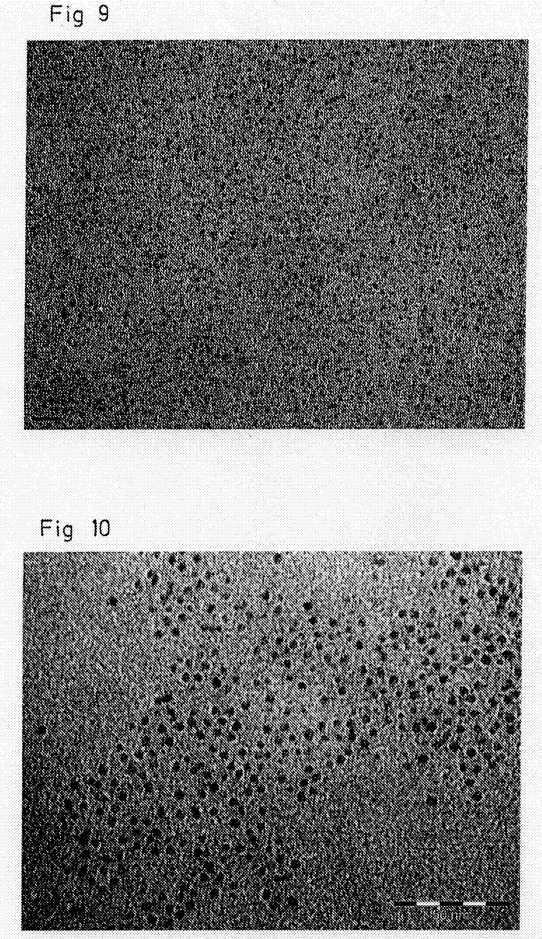

Cet exemple est identique à l'exemple 1, en remplaçant le THF par l'anisole. La figure 9 est une vue de microscopie électronique en transmission représentant les nanocristaux obtenus.

Les nanocristaux obtenus se présentent sous forme de nanoparticules d'oxyde de zinc globalement sphériques (dimensions isotropes) dont la répartition granulométrique est de 1,5 ± 0,5 nm. Ils peuvent être dispersés dans l'eau pour former une solution colloïdale aqueuse. Ils présentent les mêmes propriétés de photoluminescence que ceux obtenus à l'exemple 1.

### EXEMPLE 9 :

Cet exemple est identique à l'exemple 1, en remplaçant le THF par le toluène. La figure 10 est une vue de microscopie électronique en transmission représentant les nanocristaux obtenus.

Les nanocristaux obtenus se présentent sous forme de nanoparticules d'oxyde de zinc globalement sphériques (dimensions isotropes) dont la répartition granulométrique est de 1,8 ± 0,4 nm. Ils peuvent être dispersés dans l'eau pour former une solution colloïdale aqueuse. Ils présentent les mêmes propriétés de photoluminescence que ceux obtenus à l'exemple 1.

### EXEMPLE 10 :

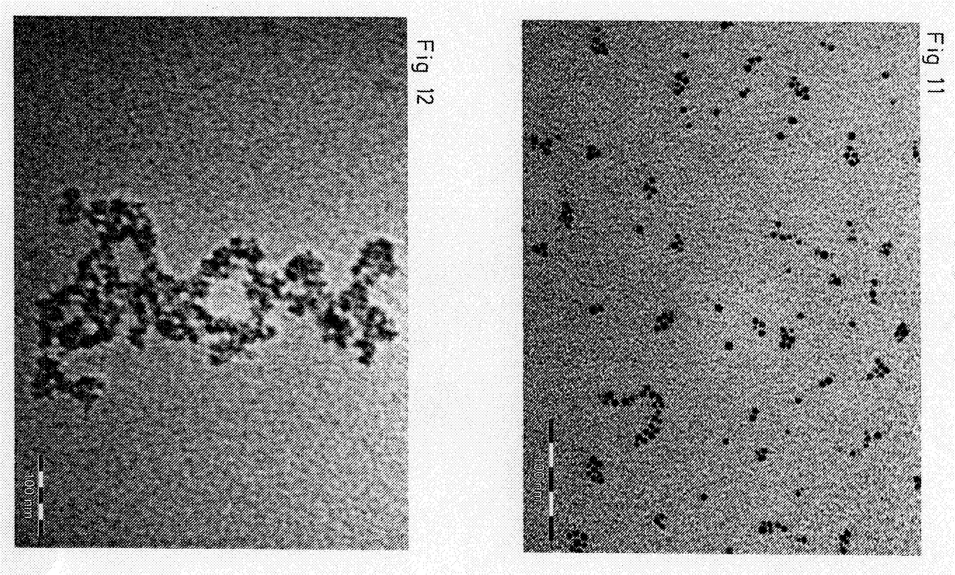

Cet exemple est identique à l'exemple 1, en remplaçant le THF par le dichlorométhane. La figure 11 est une vue de microscopie électronique en transmission représentant les nanocristaux obtenus.

Les nanocristaux obtenus se présentent sous forme de nanoparticules d'oxyde de zinc globalement sphériques (dimensions isotropes) dont la répartition granulométrique est de 4,0 ± 1,1 nm. Ils peuvent être dispersés dans l'eau pour former une solution colloïdale aqueuse. Ils présentent les mêmes propriétés de photoluminescence que ceux obtenus à l'exemple 1.

### EXEMPLE 11 :

Cet exemple est identique à l'exemple 1, en remplaçant le précurseur de zinc par 0,022 mol.L⁻¹ de Co(TMSA) de façon à obtenir une composition de nanocristaux d'oxyde de cobalt Co₃O₄.

On obtient une solution colloïdale de couleur marron correspondant à celle de l'oxyde de cobalt. Les nanocristaux obtenus peuvent ensuite être dispersés dans l'eau pour former une solution colloïdale aqueuse.

### EXEMPLE 12 :

Cet exemple est identique à l'exemple 11, en remplaçant le précurseur de cobalt par 0,022 mol.L⁻¹ de Fe(TMSA) de façon à obtenir une composition de nanocristaux d'oxyde de fer sous forme de maghémite γ-Fe₂O₃.

On obtient une solution colloïdale de couleur marron correspondant à celle de l'oxyde de fer. Les nanocristaux obtenus peuvent ensuite être dispersés dans l'eau pour former une solution colloïdale aqueuse.

### EXEMPLE 13 :

Cet exemple est identique à l'exemple 11, en remplaçant le précurseur de cobalt par 0,022 mol.L⁻¹ de Co(TMSA) et 0,044 mol.L⁻¹ de Fe(TMSA), et en présence de 0,066 mol.L⁻¹ de ligand BisAmPEG1500 de façon à obtenir une composition de nanocristaux d'oxyde mixte de ferrite de cobalt CoFe₂O₄.

On obtient une solution colloïdale de couleur marron correspondant à celle de l'oxyde mixte. Les nanocristaux obtenus peuvent ensuite être dispersés dans l'eau pour former une solution colloïdale aqueuse.

### EXEMPLE 14 :

Cet exemple est identique à l'exemple 1, en remplaçant le précurseur de zinc par 0,042 mol.L⁻¹ de In(Me)₃ et en présence de 0,042 mol.L⁻¹ de ligand BisAmPEG1500.

Les nanocristaux obtenus se présentent sous forme de nanoparticules d'oxyde d'indium In₂O₃ globalement sphériques (dimensions isotropes) dont la dimension moyenne est de l'ordre de 8 nm. Ils peuvent être dispersés dans l'eau pour former une solution colloïdale aqueuse.

La figure 12 est une vue de microscopie électronique en transmission représentant les nanocristaux obtenus.

Le spectre d'absorption des nanocristaux obtenus représenté figure 14 confirme, ainsi que les analyses aux rayons X qui ont été effectuées, qu'il s'agit bien d'oxyde d'indium In₂O₃.

### EXEMPLE 15 :

Cet exemple est identique à l'exemple 1, en remplaçant le précurseur de zinc par 0,021 mol.L⁻¹ de Sn(TMSA) et en présence de 0,021 mol.L⁻¹ de ligand BisAmPEG1500.

Les nanocristaux obtenus se présentent sous forme de nanoparticules d'oxyde d'étain SnO₂ globalement sphériques (dimensions isotropes) dont la dimension moyenne est d'environ 2 nm. Ils peuvent être dispersés dans l'eau pour former une solution colloïdale aqueuse.

Le spectre d'absorption des nanocristaux obtenus représenté figure 15 confirme, ainsi que les analyses aux rayons X qui ont été effectuées, qu'il s'agit bien d'oxyde d'étain SnO₂.

### EXEMPLE 16 :

Cet exemple est identique à l'exemple 1, en remplaçant le précurseur de zinc par 0,024 mol.L⁻¹ de In(Me)₃ et 0,012 mol.L⁻¹ de Sn(TMSA) en présence de 0,036 mol.L⁻¹ de ligand BisAmPEG1500.

Les nanocristaux obtenus se présentent sous forme de nanoparticules d'oxyde mixte d'indium et d'étain globalement sphériques (dimensions isotropes) dont la dimension moyenne est d'environ 2 nm. Ils peuvent être dispersés dans l'eau pour former une solution colloïdale aqueuse.

## Revendications

1. Procédé de préparation d'une composition de nanoparticules, dites nanocristaux d'oxyde(s) métallique(s), d'au moins un oxyde métallique à l'état cristallin, à partir d'au moins un précurseur organométallique dans lequel :
- on réalise une solution liquide d'au moins un précurseur organométallique spontanément réactif à l'oxydation, dans un milieu solvant aprotique en présence d'au moins un composé, dit ligand organique, présentant au moins une chaîne carbonée dont au moins une extrémité est fonctionnalisée par un groupement de coordination comprenant au moins un hétéroatome, et soluble dans ledit milieu solvant aprotique,
- on met cette solution liquide en contact avec au moins un oxydant dans des conditions réactionnelles adaptées pour entraîner directement la formation des nanocristaux d'oxyde(s) métallique(s),
**caractérisé en ce qu'**on choisit :
- au moins un ligand, dit ligand PEG, dans le groupe des ligands organiques comprenant au moins une chaîne carbonée présentant au moins un groupement [-OCH₂CH₂]ₙ, n étant un entier supérieur ou égal à 1, et solubles dans l'eau,
- ledit milieu solvant aprotique de façon que chaque ligand PEG soit soluble dans ce milieu solvant aprotique,
et de façon à obtenir directement en une étape une composition hydrocompatible et organocompatible de nanocristaux d'oxyde(s) métallique(s).

2. Procédé selon la revendication 1, **caractérisé en ce qu'**on utilise au moins un ligand PEG répondant à la formule générale (I) suivante :
R¹[-OCH₂CH₂]ₙ-OR² (I)
dans laquelle ;
- R¹ est choisi parmi un groupement amine primaire - R³NH₂, un groupement carboxylique -R⁴COOH, un groupement thiol -R⁵SH, un groupement phosphine -R⁶P(Ph)₂, Ph représentant le phényle, un groupement phosphonate choisi parmi -PO(OR⁷)(OR⁸), -PO(O⁻)₂, et -PO(O⁻)(OH) ; R³, R⁴, R⁵, R⁶ représentant un groupement comprenant au moins une chaîne aliphatique, R⁷ et R⁸ étant choisis parmi un atome d'hydrogène et un groupement comprenant au moins une chaîne aliphatique,
- R² est choisi parmi un atome d'hydrogène, un groupement alkyle une chaîne grasse non ramifiée, un groupement amine primaire -R³NH₂, un groupement carboxylique -R⁴COOH, un groupement thiol -R⁵SH, un groupement phosphine -R⁶P(Ph)₂, Ph représentant le phényle, un groupement phosphonate choisi parmi -PO(OR⁷)(OR⁸), -PO(O⁻)₂, et -PO(O⁻)(OH) ; R³, R⁴, R⁵, R⁶ représentant un groupement comprenant au moins une chaîne aliphatique, R⁷ et R⁸ étant choisis parmi un atome d'hydrogène et un groupement comprenant au moins une chaîne aliphatique,
- n est un nombre entier supérieur ou égal à 1.

3. Procédé selon l'une des revendications 1 ou 2, **caractérisé en ce que** chaque ligand PEG présente une masse molaire moyenne comprise entre 300 g.mol⁻¹ et 20 000 g.mol⁻¹ -notamment entre 500 g.mol⁻¹ et 5000 g.mol⁻¹-.

4. Procédé selon l'une des revendications 1 à 3, **caractérisé en ce qu'**on choisit au moins un ligand PEG, dit ligand amino/carboxy PEG, dans le groupe des amines et des acides carboxyliques comprenant au moins une chaîne carbonée présentant au moins un groupement [-OCH₂CH₂]ₙ, n étant un entier supérieur ou égal à 1, et solubles dans l'eau.

5. Procédé selon la revendication 4, **caractérisé en ce qu'**on choisit au moins un ligand amino/carboxylique PEG parmi les α-amino-poly(éthylèneglycol), les bis-amino-poly(éthylèneglycol), les α-carboxyl-poly(éthylèneglycol), les bis-carboxyl-poly(éthylèneglycol), et les α-amino-ω-carboxyl-poly(éthylèneglycol).

6. Procédé selon l'une des revendications 1 à 5, **caractérisé en ce qu'**on utilise au moins un ligand amino/carboxylique PEG choisi dans le groupe comprenant :
- le poly(éthylèneglycol) bis(3-propylamine) de formule H₂NC₃H₆[-OCH₂CH₂]ₙ-OC₃H₆NH₂, et ayant une masse molaire de l'ordre de 1500 g.mol⁻¹,
- le poly(éthylèneglycol) bis(2-éthylamine) de formule H₂NC₂H₄[-OCH₂CH₂]ₙ-OC₂H₄NH₂, et ayant une masse molaire de l'ordre de 3000 g.mol⁻¹ à 10 000 g.mol⁻¹,
- le α-(2-éthylamine)-méthoxy(éthylèneglycol) de formule H₃C[-OCH₂CH₂]ₙ-OC₂H₄NH₂, et ayant une masse molaire de l'ordre de 750 g.mol⁻¹,
- le poly(éthylèneglycol)dioïque de formule HOOC-CH₂[-OCH₂CH₂]ₙ-O-CH₂-COOH, et ayant une masse molaire de l'ordre de 600 g.mol⁻¹,
- le méthyléther-poly(éthylèneglycol)oïque de formule H₃C[-OCH₂CH₂]ₙ-O-CH₂-COOH, et ayant une masse molaire de l'ordre de 3000 g.mol⁻¹.

7. Procédé selon l'une des revendications 1 à 6, **caractérisé en ce que** ledit milieu solvant aprotique comprend un solvant choisi parmi le THF, le toluène, l'anisole, et le dichlorométhane.

8. Procédé selon l'une des revendications 1 à 7, **caractérisé en ce que** ledit milieu solvant aprotique comprend au moins un ligand PEG et au moins un composé liquide volatil dans les conditions réactionnelles, ledit composé liquide volatil étant choisi pour s'évaporer au fur et à mesure de la formation des nanocristaux, et de façon à obtenir directement les nanocristaux sous forme d'une poudre.

9. Procédé selon l'une des revendications 1 à 8, **caractérisé en ce qu'**on réalise la production des nanocristaux à pression ambiante et à une température comprise entre 0°C et 200°C -notamment à température ambiante-.

10. Composition de nanoparticules, dites nanocristaux d'oxyde(s) métallique(s), d'au moins un oxyde métallique à l'état cristallin, comprenant au moins un ligand, dit ligand PEG, choisi dans le groupe des composés organiques comprenant au moins une chaîne carbonée présentant au moins un groupement [-OCH₂CH₂]ₙ, n étant un entier supérieur ou égal à 1, et dont au moins une extrémité est fonctionnalisée par un groupement de coordination comprenant au moins un hétéroatome, et solubles dans l'eau, de sorte que cette composition de nanocristaux est hydrocompatible, **caractérisée en ce qu'**au moins un ligand PEG est en interaction directe avec les nanocristaux d'oxyde(s) métallique(s) par au moins un groupement de coordination comprenant au moins un hétéroatome, de sorte que cette composition de nanocristaux d'oxyde(s) métallique(s) est hydrocompatible et organocompatible.

11. Composition selon la revendication 10, **caractérisée en ce que** tout ligand en interaction avec les nanocristaux d'oxyde(s) métallique(s) est un ligand PEG en interaction directe avec les nanocristaux d'oxyde(s) métallique(s) par un groupement de coordination comprenant au moins un hétéroatome.

12. Composition selon l'une des revendications 10 ou 11, **caractérisée en ce qu'**il s'agit d'une solution colloïdale aqueuse.

13. Composition selon l'une des revendications 10 à 12, **caractérisée en ce que** les nanocristaux d'oxyde(s) métallique(s) sont des nanoparticules globalement sphériques de dimension moyenne comprise entre 1 nm et 5 nm.

14. Composition selon l'une des revendications 10 à 12, **caractérisée en ce que** les nanocristaux d'oxyde(s) métallique(s) sont des nanoparticules allongées présentant une dimension transversale moyenne comprise entre 1 nm et 7 nm.

15. Composition selon l'une des revendications 10 à 14, **caractérisée en ce que** les nanocristaux d'oxyde(s) métallique(s) sont choisis dans le groupe formé des nanocristaux d'oxyde de zinc, des nanocristaux d'oxyde de cobalt, des nanocristaux d'oxyde de fer, des nanocristaux d'oxyde mixte de fer et de cobalt, des nanocristaux d'oxyde d'indium, des nanocristaux d'oxyde d'étain, des nanocristaux d'oxyde mixte d'indium et d'étain.

## Patentansprüche

1. Verfahren zum Herstellen einer Nanopartikel-Zusammensetzung, bezeichnet als Metalloxid-Nanokristalle, von mindestens einem Metalloxid im kristallinen Zustand, ausgehend von mindestens einem metallorganischen Vorläufer, aufweisend:
- Realisieren einer flüssigen Lösung von mindestens einem metallorganischen Vorläufer, der spontan eine Oxidation eingeht, in einem protonenfreien Lösungsmittelmedium in Anwesenheit von mindestens einer Verbindung, bezeichnet als organischer Ligand, die mindestens eine Kohlenstoffkette, deren mindestens eines Ende mittels einer Koordinationsgruppe, die mindestens ein Heteroatom aufweist, funktionalisiert ist, aufweist, und die in dem protonenfreien Lösungsmittelmedium löslich ist,
- in Kontakt Bringen der flüssigen Lösung mit mindestens einem Oxidationsmittel unter Reaktionsbedingungen, die geeignet sind, direkt die Bildung von Metalloxid-Nanokristallen zu bewirken,
**gekennzeichnet durch** Auswählen:
- mindestens eines Liganden, bezeichnet als PEG-Ligand, aus der Gruppe der organischen Liganden, die mindestens eine Kohlenstoffkette mit mindestens einer Gruppe [-OCH₂CH₂]ₙ aufweisen, wobei n eine ganze Zahl größer oder gleich 1 ist, und die in Wasser löslich sind,
- des protonenfreien Lösungsmittelmediums derart, dass jeder PEG-Ligand in dem protonenfreien Lösungsmittelmedium löslich ist, und derart, dass in einem Schritt direkt eine hydrokompatible und organokompatible Zusammensetzung von Metalloxid-Nanokristallen erhalten wird.

2. Verfahren gemäß Anspruch 1, **gekennzeichnet durch** Verwenden mindestens eines PEG-Liganden, der der folgenden allgemeinen Formel (I) entspricht:
R¹[-OCH₂CH₂]ₙ-OR² (I)
wobei:
- R¹ ausgewählt ist aus einer primären Aminogruppe -R³NH₂, einer Carboxylgruppe -R⁴COOH, einer Thiolgruppe -R⁵SH, einer Phosphingruppe -R⁶P(Ph)₂, wobei Ph Phenyl darstellt, einer Phosphonatgruppe, ausgewählt aus -PO(OR⁷)(OR⁸), -PO(O⁻)₂, und-PO(O⁻)(OH); wobei R³, R⁴, R⁵, R⁶ eine Gruppe darstellen, die mindestens eine aliphatische Kette aufweist, und wobei R⁷ und R⁸ ausgewählt sind aus einem Wasserstoffatom und einer Gruppe, die mindestens eine aliphatische Kette aufweist,
- R² ausgewählt ist aus einem Wasserstoffatom, einer Alkylgruppe einer unverzweigten Fettkette, einer primären Aminogruppe -R³NH₂, einer Carboxylgruppe -R⁴COOH, einer Thiolgruppe -R⁵SH, einer Phosphingruppe -R⁶P(Ph)₂, wobei Ph Phenyl darstellt, einer Phosphonatgruppe ausgewählt aus - PO(OR⁷)(OR⁸), -PO(O⁻)₂, und -PO(O⁻)(OH) ; wobei R³, R⁴, R⁵, R⁶ eine Gruppe darstellen, die mindestens eine aliphatische Kette aufweist, und wobei R⁷ und R⁸ ausgewählt sind aus einem Wasserstoffatom und einer Gruppe, die mindestens eine aliphatische Kette aufweist,
- n eine ganze Zahl größer oder gleich 1 ist.

3. Verfahren gemäß einem der Ansprüche 1 oder 2, **dadurch gekennzeichnet, dass** jeder PEG-Ligand eine mittlere molare Masse zwischen einschließlich 300 g.mol⁻¹ und 20 000 g.mol⁻¹ aufweist - insbesondere zwischen 500 g.mol⁻¹ und 5000 g.mol⁻¹.

4. Verfahren gemäß einem der Ansprüche 1 bis 3, **gekennzeichnet durch** Auswählen mindestens eines PEG-Liganden, bezeichnet als Amino-/Carboxy-PEG-Ligand, aus der Gruppe der Amine und der Carboxylsäuren, die mindestens eine Kohlenstoffkette, die mindestens eine Gruppe [-OCH₂CH₂]ₙ aufweist, wobei n eine ganze Zahl größer oder gleich 1 ist, aufweisen, und die im Wasser löslich sind.

5. Verfahren gemäß Anspruch 4, **gekennzeichnet durch** Auswählen mindestens eines Amino-/Carboxylsäure-PEG-Liganden ausgewählt aus α-Amino-Poly(ethylenglycol), bis-Amino-Poly(ethylenglycol), α-Carboxyl-Poly(ethylenglycol), bis-Carboxyl-Poly(ethylenglycol) und α-Amino-ω-carboxyl-Poly(ethylenglycol).

6. Verfahren gemäß einem der Ansprüche 1 bis 5, **gekennzeichnet durch** Verwenden mindestens eines Amino-/Carboxylsäure-PEG-Liganden ausgewählt aus der Gruppe aufweisend:
- Poly(ethylenglycol)bis(3-propylamin) der Formel H₂NC₃H₆[-OCH₂CH₂]ₙ-OC₃H₆NH₂ und eine molare Masse in der Größenordnung von 1500 g.mol⁻¹ aufweisend,
- Poly(ethylenglycol)bis(2-ethylamin) der Formel H₂NC₂H₄[-OCH₂CH₂]ₙ-OC₂H₄NH₂ und eine molare Masse in der Größenordnung von 3000 g.mol⁻¹ bis 10 000 g.mol⁻¹ aufweisend,
- α-(2-Ethylamin)methoxy(ethylenglycol) der Formel H₃C[-OCH₂CH₂]ₙ-OC₂H₄NH₂ und eine molare Masse in der Größenordnung von 750 g.mol⁻¹ aufweisend,
- Poly(ethylenglycol)dicarboxylsäure der Formel HOOC-CH₂[-OCH₂CH₂]ₙ-O-CH₂-COOH und eine molare Masse in der Größenordnung von 600 g.mol⁻¹ aufweisend,
- Methylether-poly(ethylenglycol)monocarboxylsäure der Formel H₃C[-OCH₂CH₂]ₙ-O-CH₂-COOH und eine molare Masse in der Größenordnung von 3000 g.mol⁻¹ aufweisend.

7. Verfahren gemäß einem der Ansprüche 1 bis 6, **dadurch gekennzeichnet, dass** das protonenfreie Lösungsmittelmedium ein Lösungsmittel aufweist ausgewählt aus THF, Toluol, Anisol und Dichlormethan.

8. Verfahren gemäß einem der Ansprüche 1 bis 7, **dadurch gekennzeichnet, dass** das protonenfreie Lösungsmittelmedium mindestens eines PEG-Liganden und mindestens eine flüssige Verbindung, die unter Reaktionsbedingungen flüchtig ist, aufweist, wobei die flüssige flüchtige Verbindung derart ausgewählt ist, dass sie sich in dem Maße der Bildung der Nanokristalle verflüchtigt, und derart, dass die Nanokristalle direkt in der Form eines Pulvers gewonnen werden.

9. Verfahren gemäß einem der Ansprüche 1 bis 8, **gekennzeichnet durch** Realisieren der Produktion der Nanokristalle bei Umgebungsdruck und bei einer Temperatur zwischen einschließlich 0°C und 200°C - insbesondere bei Umgebungstemperatur.

10. Nanopartikel-Zusammensetzung, bezeichnet als Metalloxid-Nanokristalle,, von mindestens einem Metalloxid in kristallinem Zustand, aufweisend mindestens einen Liganden, bezeichnet als PEG-Ligand, ausgewählt aus der Gruppe von organischen Verbindungen, die mindestens eine Kohlenstoffkette mit mindestens einer Gruppe [-OCH₂CH₂]ₙ aufweisen, wobei n eine ganze Zahl größer oder gleich 1 ist, und deren mindestens eines Ende mittels einer Koordinationsgruppe, die mindestens ein Heteroatom aufweist, funktionalisiert ist, und die in Wasser löslich sind, derart, dass die Nanokristall-Zusammensetzung hydrokompatibel ist, **dadurch gekennzeichnet, dass** mindestens ein PEG-Ligand mittels mindestens einer Koordinationsgruppe, die mindestens ein Heteroatom aufweist, mit den Metalloxid-Nanokristallen direkt in Wechselwirkung tritt, derart, dass die Metalloxid-Nanokristall-Zusammensetzung hydrokompatibel und organokompatibel ist.

11. Zusammensetzung gemäß Anspruch 10, **dadurch gekennzeichnet, dass** jeder Ligand, der mit den Metalloxid-Nanokristallen in Wechselwirkung steht, ein PEG-Ligand ist, der mit den Metalloxid-Nanokristallen über eine Koordinationsgruppe, die mindestens ein Heteroatom aufweist, in Wechselwirkung steht.

12. Zusammensetzung gemäß Anspruch 10 oder 11, **dadurch gekennzeichnet, dass** es sich um eine kolloidale wässrige Lösung handelt.

13. Zusammensetzung gemäß einem der Ansprüche 10 bis 12, **dadurch gekennzeichnet, dass** die Metalloxid-Nanokristalle in ihrer Gesamtheit kugelförmige Nanopartikel mit einer mittleren Größe zwischen einschließlich 1 nm und 5 nm sind.

14. Zusammensetzung gemäß einem der Ansprüche 10 bis 12, **dadurch gekennzeichnet, dass** die Metalloxid-Nanokristalle langgestreckte Nanopartikel sind, die eine mittlere transversale Länge zwischen einschließlich 1 nm und 7 nm aufweisen.

15. Zusammensetzung gemäß einem der Ansprüche 10 bis 14, **dadurch gekennzeichnet, dass** die Metalloxid-Nanokristalle ausgewählt sind aus einer Gruppe bestehend aus Zinkoxid-Nanokristallen, Cobaltoxid-Nanokristallen, Eisenoxid-Nanokristallen, gemischten Eisen- und Cobaltoxid-Nanokristallen, Indiumoxid-Nanokristallen, Zinnoxid-Nanokristallen und gemischten Indium- und Zinnoxid-Nanokristallen.

## Claims

1. Method for preparing a composition of nanoparticles, referred to as metal oxide nanocrystals, of at least one metal oxide in the crystalline state, starting from at least one organometallic precursor, wherein:
- a liquid solution of at least one organometallic precursor which is spontaneously reactive to oxidation is prepared in an aprotic solvent medium in the presence of at least one compound, referred to as an organic ligand, which has at least one carbon chain, at least one end of which is functionalised by a coordination group comprising at least one heteroatom, and which is soluble in said aprotic solvent medium,
- this liquid solution is brought into contact with at least one oxidant under reaction conditions adapted to directly cause the formation of the metal oxide nanocrystals,
**characterised in that** there is chosen:
- at least one ligand, referred to as a PEG ligand, from the group of the organic ligands which comprise at least one carbon chain having at least one [-OCH₂CH₂]ₙ group, n being an integer greater than or equal to 1, and are soluble in water,
- said aprotic solvent medium so that each PEG ligand is soluble in the aprotic solvent medium,
and so as to obtain directly in one step a water-compatible and organo-compatible composition of metal oxide nanocrystals.

2. Method according to claim 1, **characterised in that** there is used at least one PEG ligand corresponding to the following general formula (I):
R¹[-OCH₂CH₂]ₙ-OR² (I)
wherein:
- R¹ is chosen from a primary amine group -R³NH₂, a carboxylic group -R⁴COOH, a thiol group -R⁵SH, a phosphine group -R⁶P(Ph)₂, Ph representing phenyl, a phosphonate group chosen from -PO(OR⁷)(OR⁸), -PO(O⁻)₂ and -PO(O⁻)(OH); R³, R⁴, R⁵, R⁶ representing a group comprising at least one aliphatic chain, R⁷ and R⁸ being chosen from a hydrogen atom and a group comprising at least one aliphatic chain,
- R² is chosen from a hydrogen atom, an alkyl group, an unbranched fatty chain, a primary amine group -R³NH₂, a carboxylic group -R⁴COOH, a thiol group -R⁵SH, a phosphine group -R⁶P(Ph)₂, Ph representing phenyl, a phosphonate group chosen from -PO(OR⁷)(OR⁸), -PO(O⁻)₂ and -PO(O⁻)(OH); R³, R⁴, R⁵, R⁶ representing a group comprising at least one aliphatic chain, R⁷ and R⁸ being chosen from a hydrogen atom and a group comprising at least one aliphatic chain,
- n is an integer greater than or equal to 1.

3. Method according to either claim 1 or claim 2, **characterised in that** each PEG ligand has an average molar mass between 300 g.mol⁻¹ and 20,000 g.mol⁻¹, especially between 500 g.mol⁻¹ and 5000 g.mol⁻¹.

4. Method according to any one of claims 1 to 3, **characterised in that** at least one PEG ligand, referred to as an amino/carboxy PEG ligand, is chosen from the group of the amines and carboxylic acids which comprise at least one carbon chain having at least one [-OCH₂CH₂]ₙ group, n being an integer greater than or equal to 1, and which are soluble in water.

5. Method according to claim 4, **characterised in that** at least one amino/- carboxylic PEG ligand is chosen from the α-amino-poly(ethylene glycols), bis-amino-poly(ethylene glycols), α-carboxyl-poly(ethylene glycols), bis-carboxyl-poly(ethylene glycols), and α-amino-ω-carboxyl-poly(ethylene glycols).

6. Method according to any one of claims 1 to 5, **characterised in that** there is used at least one amino/carboxylic PEG ligand chosen from the group comprising:
- poly(ethylene glycol) bis(3-propylamine) of formula H₂NC₃H₆[-OCH₂CH₂]ₙ-OC₃H₆NH₂ and having a molar mass of approximately 1500 g.mol⁻¹,
- poly(ethylene glycol) bis(2-ethylamine) of formula H₂NC₂H₄[-OCH₂CH₂]ₙ-OC₂H₄NH₂ and having a molar mass of approximately from 3000 g.mol⁻¹ to 10,000 g.mol⁻¹,
- α-(2-ethylamine)-methoxy(ethylene glycol) of formula H₃C[-OCH₂CH₂]ₙ-OC₂H₄NH₂ and having a molar mass of approximately 750 g.mol⁻¹,
- poly(ethylene glycol)dioic of formula HOOC-CH₂[-OCH₂CH₂]ₙ-O-CH₂-COOH and having a molar mass of approximately 600 g.mol⁻¹,
- methyl ether poly(ethylene glycol)oic of formula H₃C[-OCH₂CH₂]ₙ-O-CH₂-COOH and having a molar mass of approximately 3000 g.mol⁻¹.

7. Method according to any one of claims 1 to 6, **characterised in that** said aprotic solvent medium comprises a solvent chosen from THF, toluene, anisole, and dichloromethane.

8. Method according to any one of claims 1 to 7, **characterised in that** said aprotic solvent medium comprises at least one PEG ligand and at least one liquid compound which is volatile under the reaction conditions, said volatile liquid compound being chosen to evaporate as the nanocrystals form, and so as to obtain the nanocrystals directly in the form of a powder.

9. Method according to any one of claims 1 to 8, **characterised in that** the production of the nanocrystals is carried out at ambient pressure and at a temperature of between 0°C and 200°C, especially at ambient temperature.

10. Composition of nanoparticles, referred to as metal oxide nanocrystals, of at least one metal oxide in the crystalline state, comprising at least one ligand, referred to as a PEG ligand, chosen from the group of the organic compounds which comprise at least one carbon chain having at least one [-OCH₂CH₂]ₙ group, n being an integer greater than or equal to 1, and at least one end of which is functionalised by a coordination group comprising at least one heteroatom, and which are soluble in water, so that the composition of nanocrystals is water-compatible, **characterised in that** at least one PEG ligand is in direct interaction with the metal oxide nanocrystals by at least one coordination group comprising at least one heteroatom, so that the composition of metal oxide nanocrystals is water-compatible and organo-compatible.

11. Composition according to claim 10, **characterised in that** any ligand in interaction with the metal oxide nanocrystals is a PEG ligand in direct interaction with the metal oxide nanocrystals by a coordination group comprising at least one heteroatom.

12. Composition according to either claim 10 or claim 11, **characterised in that** it is an aqueous colloidal solution.

13. Composition according to any one of claims 10 to 12, **characterised in that** the metal oxide nanocrystals are generally spherical nanoparticles having an average dimension of between 1 nm and 5 nm.

14. Composition according to any one of claims 10 to 12, **characterised in that** the metal oxide nanocrystals are elongate nanoparticles having an average transverse dimension of between 1 nm and 7 nm.

15. Composition according to any one of claims 10 to 14, **characterised in that** the metal oxide nanocrystals are chosen from the group formed of nanocrystals of zinc oxide, nanocrystals of cobalt oxide, nanocrystals of iron oxide, nanocrystals of a mixed iron and cobalt oxide, nanocrystals of indium oxide, nanocrystals of tin oxide, nanocrystals of a mixed indium and tin oxide.
